# EUROPÄISCHE PATENTSCHRIFT

(11) **EP 0 358 603 B1**
(45) Veröffentlichungstag und Bekanntmachung des Hinweises auf die Patenterteilung: **29.12.1997**
(21) Anmeldenummer: 89810639.8
(22) Anmeldetag: 29.08.1989
(51) Int. Cl.: C08L 63/00, C08L 53/00, C08L 87/00, C08L 67/04

(54) **Mit Blockpolymeren und Polyurethanen bzw. Polyharnstoffen modifizierte Epoxidharze.**
Epoxy resins modified by block polymers and either polyurethanes or polyureas.
Résines époxy modifiées par des polymères séquencées et des polyuréthanes ou des polycarbamides.

(30) Priorität: 06.09.1988 CH 3333/88
(43) Veröffentlichungstag der Anmeldung: 14.03.1990
(73) Patentinhaber: Ciba Specialty Chemicals Holding Inc., 4057 Basel (CH)
(72) Erfinder: Mülhaupt, Rolf, Prof. Dr., CH-1723 Marly (CH); Rüfenacht, Werner, CH-1723 Marly (CH); Powell, Jeremy Hugh, Horseheath Cambridge CB1 6QF (GB); Mechera, Karl, Dr., CH-4132 Muttenz (CH)

(56) Entgegenhaltungen:
- EP-A- 0 260 799
- EP-A- 0 267 053
- US-A- 3 585 257
- US-A- 4 423 201
- Polym.Mater.Sci.Eng., Band 49, Seiten 383-387(1983)

## Beschreibung

Die Erfindung betrifft Gemische aus Epoxidharzen und speziellen Dien-Lacton-Blockpolymeren, härtbare Gemische dieses Typs enthaltend zusätzlich Härter für Epoxidharze, Addukte der besagten Blockpolymere mit Epoxidharzen, die vernetzten Produkte aus den erwähnten härtbaren Gemischen, sowie die Verwendung der Mehrkomponentengemische als Klebstoffe, insbesondere als Strukturkleber.

Epoxidharze zeichnen sich durch viele gute Eigenschaften aus. Allerdings weisen gehärtete Produkte für gewisse Anwendungen ungenügende Flexibilität und Schlagzähigkeit auf, und die Haftung auf öligem Stahl ist ungenügend. Zwar bewirken die bekannten Flexibilisatorzusätze im allgemeinen eine Erhöhung der Flexibilität der gehärteten Produkte, die Schälfestigkeit lässt aber weitgehend zu wünschen übrig. Zudem werden in der Regel durch den Einbau solcher Zusätze die Zugscherfestigkeit und die Glasübergangstemperatur reduziert.

Die Verwendung von Polycaprolacton- und Butadiencopolymer-Flexibilisatoren ist an sich bekannt. Beispielsweise beschreibt die US 3,678,131 Klebstoffgemische mit erhöhter Zähigkeit, welche als Epoxidharzkomponente ein Umsetzungsprodukt eines Polyepoxids mit einer kleineren Menge eines carboxylgruppenhaltigen Polymers, z.B. eines Butadien-Acrylnitril-Copolymers, und mit 2,2-Bis(4-hydroxyphenyl)-sulfon enthalten.

Aus der US 3,947,522 sind modifizierte Epoxidharzgemische bekannt, welche als Flexibilisator ein Butadien-Acrylnitril- oder ein Butadien-Methacrylnitril-Copolymer mit endständigen COOH, OH oder SH Gruppen enthalten. Die Eigenschaften der Gemische, welche für die Herstellung von Klebstoffen verwendet werden, werden durch Vulkanisierung des Butadiencopolymers mit einem organischen Peroxid oder mit Schwefel verbessert.

Im Journal of Polymer Science, Polymer Chemistry Edition, Band 12, Seiten 689-705 (1974) werden mit Polycaprolacton oder mit Polypropylenoxid modifizierte Epoxidharze beschrieben. Die Gemische werden mit Anhydridhärtern vernetzt. Bei Verwendung von Modifizierungsmitteln mit einem geeigneten Molekulargewicht werden zweiphasige vernetzte Systeme erhalten, welche sich durch eine bessere Ausgewogenheit von Wärmeformbeständigkeit und Schlagzähigkeit auszeichnen.

Im Polym. Mater. Sci. Eng., Band 49, Seiten 383-387 (1983) wird die Flexibilisierung von Epoxidharzen mit reaktiven Polybutadienen beschrieben. Dabei wird die Mischbarkeit des Epoxidharzes mit dem Polybutadien entweder durch Vorreaktion der endständigen Carboxylgruppen des Polybutadiens mit den Epoxidgruppen des Harzes oder durch Anknüpfen eines Polyesterblocks an das Polybutadien erhöht. Der Polyesterblock wird in situ durch Umsetzung der endständigen Hydroxyl- oder Carboxylgruppen des Polybutadiens mit Phenylglycidylether als Diolkomponente und Hexahydrophthalsäureanhydrid als Säurekomponente gebildet. Solche endverkappten Polybutadiene werden als Flexibilisatoren mit Epoxidharz auf Basis von Bisphenol-A verwendet, und das Gemisch wird mit Hexahydrophthalsäureanhydrid oder mit Diethylentriamin gehärtet.

Aus der GB 1,399,257 sind Gemische aus Epoxidharzen und phenol-verkappten Polyurethanen bekannt. Die Polyurethane werden durch Umsetzung von präpolymeren Diisocyanaten mit gegebenenfalls substituierten Monophenolen erhalten. Die Produkte besitzen keine freien phenolischen Hydroxylgruppen mehr. Sie werden zusammen mit Epoxidharzen und Polyaminhärtern zu härtbaren Beschichtungsmitteln kombiniert, die sich durch besondere Elastizität auszeichnen.

Die EP-A 0 260 799 beschreibt Grundierungszusammensetzungen für Kunstoff- oder Stahlplatten im Fahrzeugbau, die im wesentlichen aus Pfropfpolymeren bestehen, die durch Pfropfpolymerisation eines Styrol-Butadien-Styrol-Blockcopolymeren mit Polycaprolacton erhalten werden. Diese Zusammensetzungen können bis zu 30 Gew.-% eines Festharzes, z.B. eines Epoxidharzes, enthalten.

In der EP-A 0 267 053 werden Caprolacton-Butadien-Blockcopolymere als Additive zur Erhöhung der Schlagfestigkeit von thermoplastischen und duroplastischen Harzen, insbesondere von ungesättigten Polyestern, beschrieben.

Vorbekannte Produkte auf Basis von Epoxidharzen und Butadien-Homo- und Copolymeren enthalten in der Regel keine hohen Anteile der flexibilisierenden Komponente, da sich Gemische mit einem hohen Flexibilisatorgehalt nicht oder nur ungenügend härten lassen bzw. zu hohe Viskositäten aufweisen. Polybutadienoligomere mit epoxidreaktiven Gruppen sind nicht mit dem Epoxidharz verträglich.

Es wurde nun gefunden, dass sich Gemische von Epoxidharzen und hohen Anteilen an speziellen Dien-Lacton-Blockpolymeren härten lassen, und sich somit hochflexible Produkte herstellen lassen. Die definitionsgemässen Dien-Lacton-Blockpolymere sind mit Epoxidharzen gut dispergierbar ohne Einsatz zusätzlicher Dispersionshilfsmittel.

Gegenstand der Erfindung sind Zusammensetzungen enthaltend
(A) ein Epoxidharz und
(B) ein Blockpolymer enthaltend mindestens einen Block (B1) eines 1,3-Dien-Homo- oder -Copolymers und mindestens zwei Blöcke (B2) eines Lacton-Homo- oder -Copolymers, und
(C) eine Verbindung der Formel I 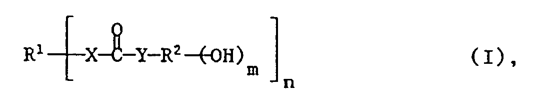 worin m 1 oder 2 ist, n 2 bis 6 bedeutet, R¹ der n-wertige Rest eines in Epoxidharzen löslichen oder dispergierbaren, elastomeren Präpolymeren nach dem Entfernen der endständigen Isocyanat-, Amino- oder Hydroxylgruppen ist,
   X und Y unabhängig voneinander -O- oder -NR³- bedeuten, wobei mindestens eine dieser Gruppen -NR³- sein muss, R² ein m+1-wertiger Rest eines Polyphenols oder Aminophenols nach dem Entfernen der phenolischen Hydroxylgruppen bzw. der Aminogruppe ist, und R³ Wasserstoff, C₁-C₆Alkyl oder Phenyl bedeutet.

Als Komponente (A) kann im Prinzip jede in der Technik der Epoxidharze übliche Verbindung eingesetzt werden.

### Beispiele für Epoxidharze sind:

I) Polyglycidyl- und Poly-(β-methylglycidyl)-ester erhältlich durch Umsetzung einer Verbindung mit mindestens zwei Carboxylgruppen im Molekül und Epichlorhydrin bzw. β-Methyl-epichlorhydrin. Die Umsetzung erfolgt zweckmässig in der Gegenwart von Basen.

Als Verbindung mit mindestens zwei Carboxylgruppen im Molekül können aliphatische Polycarbonsäuren verwendet werden. Beispiele für diese Polycarbonsäuren sind Oxalsäure, Bernsteinsäure, Glutarsäure, Adipinsäure, Pimelinsäure, Korksäure, Azelainsäure oder dimerisierte bzw. trimerisierte Linolsäure.

Es können aber auch cycloaliphatische Polycarbonsäuren eingesetzt werden, wie beispielsweise Tetrahydrophthalsäure, 4-Methyltetrahydrophthalsäure, Hexahydrophthalsäure oder 4-Methylhexahydrophthalsäure.

Weiterhin können aromatische Polycarbonsäuren Verwendung finden, wie beispielsweise Phthalsäure, Isophthalsäure oder Terephthalsäure.

II) Polyglycidyl- oder Poly(β-methylglycidyl)ether erhältlich durch Umsetzung einer Verbindung mit mindestens zwei freien alkoholischen Hydroxygruppen und/oder phenolischen Hydroxygruppen und einem geeignet substituierten Epichlorhydrin unter alkalischen Bedingungen, oder in Anwesenheit eines sauren Katalysators und anschliessende Alkalibehandlung.

Ether dieses Typs leiten sich beispielsweise ab von acyclischen Alkoholen, wie Ethylenglykol, Diethylenglykol und höheren Poly(oxyethylen)glykolen, Propan-1,2-diol oder Poly(oxypropylen)glykolen, Propan-1,3-diol, Butan-1,4-diol, Poly(oxytetramethylen)glykolen, Pentan-1,5-diol, Hexan-1,6-diol, Hexan-2,4,6-triol, Glycerin, 1,1,1-Trimethylolpropan, Pentaerythrit, Sorbit, sowie von Polyepichlorhydrinen.

Sie leiten sich aber auch beispielsweise ab von cycloaliphatischen Alkoholen wie 1,4-Cyclohexandimethanol, Bis(4-hydroxycyclohexyl)methan oder 2,2-Bis(4-hydroxycyclohexyl)propan oder sie besitzen aromatische Kerne wie N,N-Bis(2-hydroxyethyl)anilin oder p,p'-Bis(2-hydroxyethylamino)diphenylmethan.

Die Epoxidverbindungen können sich auch von einkernigen Phenolen ableiten, wie beispielsweise von Resorcin oder Hydrochinon; oder sie basieren auf mehrkernigen Phenolen, wie beispielsweise Bis(4-hydroxyphenyl)methan, 4,4'-Dihydroxybiphenyl, Bis(4-hydroxyphenyl)sulfon, 1,1,2,2-Tetrakis(4-hydroxyphenyl)ethan, 2,2-Bis(4-hydroxyphenyl)propan, 2,2-Bis(3,5-dibrom-4-hydroxyphenyl)propan sowie von Novolaken erhältlich durch Kondensation von Aldehyden wie Formaldehyd, Acetaldehyd, Chloral oder Furfuraldehyd mit Phenolen wie Phenol, oder mit Phenolen, die im Kern mit Chloratomen oder C₁-C₉Alkylgruppen substituiert sind, wie beispielsweise 4-Chlorphenol, 2-Methylphenol oder 4-tert-Butylphenol oder durch Kondensation mit Bisphenolen, so wie oben beschrieben.

III) Poly(N-glycidyl) Verbindungen erhältlich durch Dehydrochlorierung der Reaktionsprodukte von Epichlorhydrin mit Aminen, die mindestens zwei Aminwasserstoffatome enthalten. Bei diesen Aminen handelt es sich zum Beispiel um Anilin, n-Butylamin, Bis(4-aminophenyl)methan, m-Xylylendiamin oder Bis(4-methylaminophenyl)methan.

Zu den Poly(N-glycidyl) Verbindungen zählen aber auch Triglycidylisocyanurat, N,N'-Diglycidylderivate von Cycloalkylenharnstoffen, wie Ethylenharnstoff oder 1,3-Propylenharnstoff, und Diglycidylderivate von Hydantoinen, wie von 5,5-Dimethylhydantoin.

IV) Poly(S-glycidyl) Verbindungen, beispielsweise Di-S-glycidylderivate, die sich von Dithiolen, wie beispielsweise Ethan-1,2-dithiol oder Bis(4-mercaptomethylphenyl)ether ableiten.

V) Cycloaliphatische Epoxidharze, beispielsweise Bis(2,3-epoxycyclopentyl)ether, 2,3-Epoxycyclopentylglycidylether, 1,2-Bis(2,3-epoxycyclopentyloxy)ethan oder 3,4-Epoxycyclohexylmethyl-3',4'-epoxycyclohexancarboxylat.

Es lassen sich aber auch Epoxidharze verwenden, bei denen die 1,2-Epoxidgruppen an unterschiedliche Heteroatome bzw. funktionelle Gruppen gebunden sind; zu diesen Verbindungen zählen beispielsweise das N,N,O-Triglycidylderivat des 4-Aminophenols, der Glycidylether-glycidylester der Salicylsäure, N-Glycidyl-N'-(2-glycidyloxypropyl)-5,5-dimethylhydantoin oder 2-Glycidyloxy-1,3-bis(5,5-dimethyl-1-glycidylhydantoin-3-yl)propan.

Bevorzugt verwendet werden Epoxidharze mit einem Epoxidgehalt von 2 bis 10 Aequivalenten/kg, welche Glycidylether, Glycidylester oder N-Glycidylderivate von aromatischen, heterocyclischen, cycloaliphatischen oder aliphatischen Verbindungen sind.

Besonders bevorzugt als Epoxidharze werden Polyglycidylether von Bisphenolen, wie beispielsweise von 2,2-Bis(4-hydroxyphenyl)propan (Bisphenol A) oder Bis(4-hydroxyphenyl)methan (Bisphenol F), von Novolaken, die durch Umsetzung von Formaldehyd mit einem Phenol gebildet werden, oder von den oben erwähnten aliphatischen Diolen, insbesondere von Butan-1,4-diol.

Am meisten bevorzugt als Epoxidharze werden Polyglycidylether auf Basis von Bisphenol A.

Das Blockpolymer (B) der erfindungsgemässen Zusammensetzungen enthält mindestens einen Block (B1) eines 1,3-Dien-Homo- oder -Copolymers und mindestens zwei Blöcke (B2) eines Lacton-Homo- oder -Copolymers. Das Blockpolymer kann vom Typ B2-B1-B2, B1(B2)ₓ , oder (̵B1-B2 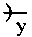 sein. Falls die Blöcke B1 oder B2 Copolymere sind, handelt es sich dabei vorzugsweise um statistische Polymere.

Beispiele für 1,3-Diene zur Herstellung des Blocks (B1) sind Butadien, Isopren und Chloropren. Bevorzugt sind Copolymere auf Butadienbasis.

Der Block B1 kann neben der Dien-Komponente noch vorzugsweise 0,1 bis 50, insbesondere 0,1 bis 30 Mol-%, bezogen auf den Gesamtblock, einer oder mehrerer ethylenisch ungesättigten Cokomponenten, insbesondere einer vinylaromatischen Verbindung, Acrylnitril, Methacrylnitril oder eines Acrylsäure- oder Methacrylsäurederivats enthalten.

Beispiele für geeignete ethylenisch ungesättigte Comonomere zur Herstellung des Blocks (B1) sind Acrylsäure, Methacrylsäure, Ester der Acryl- oder Methacrylsäure, beispielsweise die Methyl-, Ethylester oder Glycidylester, Amide der Acryl- oder Methacrylsäure, Fumarsäure, Itaconsäure, Maleinsäure oder deren Ester oder Halbester, beispielsweise die Mono- oder Dimethylester, oder Maleinsäure, oder Itaconsäureanhydrid; Vinylester, beispielsweise Vinylacetat, Styrol, substituierte Styrole, wie kernchlorierte oder kernbromierte Styrole oder Vinyltoluol, Ethylen, Propylen, oder insbesondere Acrylnitril oder Methacrylnitril.

Bevorzugte Cokomponenten im Block (B1) sind Styrol, Acrylate, Methacrylate oder insbesondere Acrylnitril. Vorzugsweise ist der Block (B1) des Blockpolymers ein Butadien-Acrylnitril-Copolymer oder insbesondere ein Butadien-Homopolymer.

Die Blocklänge des Blocks (B1) entspricht vorzugsweise einem Molekulargewicht M n von 500 bis 10000, insbesondere von 1000 bis 5000. Wenn die Cokomponente oder eine der Cokomponenten im Block (B1) mit Epoxidharzen bzw. cyclischen Lactonen reaktive Gruppen, wie z.B. die Carboxylgruppen der Acrylsäure oder Methacrylsäure, aufweist, enthält Block (B1) vorzugsweise höchstens 10 Mol-% dieser Cokomponente.

Blockpolymere vom Typ B2-B1-B2 erhält man durch Aufpolymerisieren von cyclischen Lactonen auf mit cyclischen Lactonen reaktive Endgruppen des Blocks B1. Blockpolymere vom Typ B1(B2)ₓ erhält man durch Aufpolymerisieren von cyclischen Lactonen auf mit cyclischen Lactonen reaktive funktionelle Gruppen von Comonomereinheiten im Block B1.

Das Blockpolymer (B) enthält vorzugsweise mindestens 20, insbesondere 25 bis 55 Gew.% des 1,3-Diens bezogen auf das Gesamtgewicht der Blöcke (B1) und (B2).

Die Blöcke (B2) des Blockpolymers werden vorzugsweise durch Homo- oder Copolymerisation von Lactonen der Formel 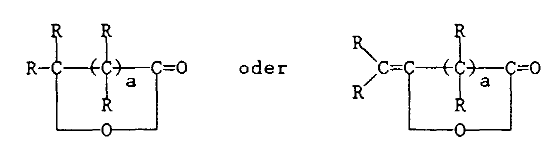 erhalten, worin R unabhängig voneinander Wasserstoff, Alkyl, Cycloalkyl, Alkenyl, Cycloalkenyl oder Aryl bedeutet, wobei die Gesamtzahl der C-Atome der Substituenten R nicht höher als 12 ist, und worin a 1, 3, 4 oder 5 ist.

Bedeutet R Alkyl, so handelt es sich dabei um geradkettige oder verzweigte Reste. Beispiele dafür sind Methyl, Ethyl, n-Propyl, Isopropyl, n-Butyl, Isobutyl, tert-Butyl, n-Pentyl, n-Hexyl, 2-Ethylbutyl, n-Heptyl, n-Octyl, 2-Ethylhexyl, n-Nonyl, n-Decyl, n-Undecyl oder n-Dodecyl. Vorzugsweise ist R C₁-C₆-Alkyl, besonders bevorzugt geradkettiges C₁-C₆-Alkyl und ganz besonders bevorzugt Methyl.

Ist R Cycloalkyl, so handelt es sich dabei beispielsweise um einen Cyclopentyl-, Cyclohexyl-, Cycloheptyl-, Cyclooctyl- oder Cyclododecylrest. Bevorzugt wird Cyclohexyl und Cyclopentyl.

R bedeutet als Alkenyl beispielsweise Vinyl, Allyl, 1-Propenyl, 1-Butenyl, 1-Pentenyl oder 1-Hexenyl. Bevorzugt werden Vinyl, 1-Propenyl und insbesondere Allyl.

Als Cycloalkenyl kommen z.B. Cyclohexenyl oder Cyclopentenyl in Frage. Als Arylrest wird Phenyl bevorzugt. R ist vorzugsweise Wasserstoff.

Geeignete Lactone sind z.B. β-Propiolacton, Δ-Valerolacton, ε-Caprolacton und Lactone der folgenden Säuren: 2-Methyl-3-hydroxypropionsäure, 3-Hydroxynonansäure oder 3-Hydroxypelargonsäure, 2-Dodecyl-3-hydroxypropionsäure, 2-Cyclopentyl-3-hydroxypropionsäure, 3-Phenyl-3-hydroxypropionsäure, 2-Naphthyl-3-hydroxypropionsäure, 2-n-Butyl-3-cyclohexyl-3-hydroxypropionsäure, 2-Phenyl-3-hydroxytridecansäure, 2-(2-Methylcyclopentyl)-3-hydroxypropionsäure, 2-Methylphenyl-3-hydroxypropionsäure, 3-Benzyl-3-hydroxypropionsäure, 2,2-Dimethyl-3-hydroxypropionsäure, 2-Methyl-5-hydroxyvaleriansäure, 3-Cyclohexyl-5-hydroxyvaleriansäure, 4-Phenyl-5-hydroxyvaleriansäure, 2-Heptyl-4-cyclopentyl-5-hydroxyvaleriansäure, 2-Methyl-3-phenyl-5-hydroxyvaleriansäure, 3-(2-Cyclohexylethyl)-5-hydroxyvaleriansäure, 4-Benzyl-5-hydroxyvaleriansäure, 3-Ethyl-5-isopropyl-6-hydroxycapronsäure, 2-Cyclopentyl-4-hexyl-6-hydroxycapronsäure, 3-Phenyl-6-hydroxycapronsäure, 3-(3,5-Diethylcyclohexyl)-5-ethyl-6-hydroxycapronsäure, 4-Phenylpropyl-6-hydroxycapronsäure, 2-Benzyl-5-isobutyl-6-hydroxycapronsäure, 2,2,4-Trimethyl-3-hydroxy-4-pentensäure, 7-Phenyl-6-hydroxy-6-octensäure, 2,2-Di(1-cyclohexyl)-5-hydroxy-5-heptensäure, 2,2-Dipropenyl-5-hydroxy-5-heptensäure, 2,2-Dimethyl-4-propenyl-3-hydroxy-3,5-heptadiensäure und dergleichen. Auch Mischungen aus zwei oder mehreren der obigen Lactone können verwendet werden.

Der lactonhaltige Block (B2) kann auch kleinere Mengen, vorzugsweise bis zu 10 Gew.% von Cokomponenten enthalten. Geeignete Cokomponenten sind z.B. Alkylenoxide, wie Ethylenoxid oder Propylenoxid oder Diole wie z.B. Hexandiol.

Besonders bevorzugt wird als Lactonkomponente des Blocks (B2) ε-Caprolacton eingesetzt.

Blockpolymere enthaltend 1,3-Dien-Homo- oder -Copolymer-Blöcke und Lacton-Homo- oder -Copolymer-Blöcke sind bekannt und können auf bekannte Weise hergestellt werden.

Die Blöcke (B1) können z.B. durch radikalische oder anionische Polymerisation ethylenisch ungesättigter Verbindungen unter Verwendung bekannter Katalysatoren hergestellt werden. Die Blöcke (B1) enthalten funktionelle Gruppen wie z.B. COOH, OH, SH, NH₂, 〉NH oder 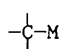 Gruppen, mit M gleich Alkalimetall, wie z.B. Li, welche mit dem Lacton-Monomer zum Blockpolymer weiterreagieren können. Die funktionellen Gruppen können durch Verwendung eines entsprechenden funktionellen Initiators oder durch Einbau von funktionelle Gruppen enthaltenden Comonomeren in die Polymerkette eingeführt werden.

Geeignete dienhaltige Polymere mit endständigen funktionellen Gruppen sowie Verfahren zu deren Herstellung sind z.B. in Rubber Chemistry and Technology, Band 42, Seiten 71-109 (1969) beschrieben.

Der dienhaltige Block (B1) kann auch aus Mikropartikeln mit einem Durchmesser von etwa 0,1-50 µm, insbesondere 0,1-20 µm, bestehen, welche zum Beispiel durch Emulsionspolymerisation von Dienen mit OH- oder COOH-haltigen Comonomeren, oder durch Polymerisation von solchen Monomergemischen in einem Lacton, wie ε-Caprolacton, hergestellt werden. Geeignete Herstellungsverfahren für Emulsionspolymere sind z.B. in W. R. Sorensen, T W. Campbell, "Preparative Methods of Polymer Chemistry", Interscience Publ., John Wily & Sons, New York 1968, S. 313, beschrieben.

Viele derartige geeignete dienhaltige funktionelle Polymere sind im Handel erhältlich, wie z.B. die HYCAR® CTB, CTBN oder ATBN-Polymere der Firma Goodrich.

Die Umsetzung der dienhaltigen Polymere enthaltend COOH, OH, SH, NH₂ oder 〉NH funktionelle Gruppen mit einem geeigneten Lacton erfolgt vorzugsweise im Temperaturbereich von ca. 100-250°C, insbesondere bei etwa 180°C, während ca. 1-10 Stunden in Gegenwart eines Umsetzungskatalysators, wie z.B. Dibutylzinnoxid, Dibutylzinndilaurat oder Titantetraisopropylat. Die Menge des Katalysators beträgt vorzugsweise 0,01-5, insbesondere 0,1-0,5 Gew.%, bezogen auf das Gewicht des Lactons. Die Umsetzung der dienhaltigen Polymere, welche 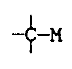 Gruppen, wie z.B. 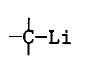 Gruppen enthalten, mit Lactonen wird vorzugsweise bei Temperaturen von etwa -30 bis 150°C, insbesondere bei etwa 0-120°C durchgeführt.

Spezifische Verfahren für die Herstellung von Dien-Lacton-Blockpolymeren unter Verwendung von Oxiranverbindungen bzw. von Polyaziridinylverbindungen werden von L.H. Hsieh et al. in der US 3,585,257, im J.Appl. Polym.Sci. 22, 1119-1127 (1978) bzw. in der US 3,880,955 beschrieben. Dabei werden alkalimetallhaltige Dienpolymere beispielsweise zuerst mit einem Oxiran, wie z.B. Ethylenoxid, umgesetzt und das so entstandene Produkt wird dann mit einem Lacton, wie z.B. ε-Caprolacton, zum entsprechenden Blockpolymeren reagiert. In der erwähnten US 3,585,257 werden als geeignete Oxiranverbindungen u.a. auch einzelne cycloaliphatische Diepoxide sowie einzelne Glycerin-Tris(epoxyalkanoate) erwähnt und in den Beispielen IX und X eingesetzt. Die erwähnten vorbeschriebenen Dien-Lacton Blockpolymere haben je nach ihrer Zusammensetzung gummiartige, lederartige oder thermoplastische Eigenschaften und zeichnen sich durch gute mechanische Eigenschaften und Ozonresistenz aus.

Aehnliche Blockpolymere werden gemäss der DE-OS 3 000 290 zusammen mit aromatischen Polycarbonaten als Schlagfestigkeit modifizierende Mittel in thermoplastischen Polyesterzusammensetzungen verwendet. Das Blockpolymer ist ein Homo- oder Copolymer aus konjugierten Dienen und/oder vinylaromatischen Verbindungen, welches mit einem gummiartigen Polyester endblockiert ist, wie zum Beispiel ein mit ε-Caprolacton endblockiertes Styrol-Butadien-Copolymer.

Die Blocklänge des polylactonhaltigen Blocks (B2) der erfindungsgemäss verwendeten Blockpolymere entspricht vorzugsweise einem Molekulargewicht Mₙ von 200 bis 10000, insbesondere von 500 bis 3000.

Die mittlere Funktionalität der Blockpolymere (B) beträgt wenigstens 2, vorzugsweise 2 bis 6, und besonders bevorzugt 2 bis 3.

Die erfindungsgemäss eingesetzten Blockpolymere (B) können auch Glycidylgruppen enthalten. Eine Möglichkeit für die Herstellung solcher glycidylgruppenhaltiger Blockpolymere ist die Umsetzung der Blockpolymere (B) mit einem Glycidylgruppen enthaltenden Epoxidharz. Dabei kommt es zu einer Reaktion der Glycidylgruppen des Harzes mit den reaktiven funktionellen Gruppen, z.B. mit Carboxylgruppen, des Blockpolymers. Falls erwünscht, kann die Umsetzung auch in Gegenwart eines Vorverlängerungsmittels für Epoxidharze, z.B. eines Bisphenols, stattfinden. Die Umsetzung erfolgt geeigneterweise in Gegenwart eines Katalysators, wie z.B. Triphenylphosphin, tertiäre Amine, quaternäre Ammonium- oder Phosphoniumsalze oder Chrom-Acetylacetonat, bei erhöhter Temperatur, z.B. bei 140°C während etwa 3-5 Stunden. Vorzugsweise werden dabei etwa 0,1-5, insbesondere etwa 1-2 Gew.% des Katalysators, bezogen auf die Menge des Epoxidharzes und gegebenenfalls des Vorverlängerungsmittels eingesetzt.

Eine andere Möglichkeit für die Herstellung der erwähnten Glycidylgruppen enthaltenden Blockpolymere ist die Umsetzung der 1,3-Dien enthaltenden Blöcke mit einem Glycidylgruppen enthaltenden Epoxidharz, gegebenenfalls in Gegenwart eines Vorverlängerungsmittels, z.B. eines Bisphenols, und anschliessende Umsetzung dieses Adduktes mit einem Lacton, z.B. ε-Caprolacton. Bei dieser Herstellungsart reagieren die Epoxidgruppen des Harzes mit reaktiven funktionellen Gruppen, beispielsweise Carboxylgruppen des 1,3-Dien-Polymers, und anschliessend reagieren die durch die Addition der Carboxylgruppen auf die Glycidylgruppen entstandenen sekundären Hydroxylgruppen mit dem Lacton zum glycidylgruppenhaltigen Dien-Lacton-Blockpolymer. Dabei entsprechen die Reaktionsbedingungen und gegebenenfalls eingesetzte Katalysatoren für die Adduktierung des Epoxidharzes und für die Polymerisation des Lactons den bereits erwähnten Bedingungen für die Durchführung dieser Umsetzungen. Die erwähnte Umsetzung der Epoxidharzaddukte mit cyclischen Lactonen kann auch "in situ" bei der Härtung erfolgen, wenn cyclische Lactone mit Umesterungskatalysatoren, wie z.B. Dibutylzinnoxid, zugesetzt werden.

Komponente (C) ist ein ausgewähltes Polyurethan oder ein ausgewählter Polyharnstoff, die sich von einem speziellen Präpolymeren ableiten. Unter einem "elastomeren Präpolymerrest R^{1"} versteht man im Rahmen dieser Beschreibung einen mit n Isocyanat-, Amino- oder Hydroxylgruppen terminierten Rest eines Präpolymeren, der nach der Verkappung dieser Gruppen zu einer Verbindung der Formel I führt, welche in Kombination mit dem Epoxidharz (A) und dem Blockpolymer (B) nach der Härtung eine Elastomerphase oder eine Mischung von Elastomerphasen ergibt. Dabei kann es sich um homogene oder um heterogene Kombinationen von Komponenten (A), (B) und (C) handeln. Die Elastomerphase(n) ist (sind) in der Regel durch eine Glasübergangstemperatur von weniger als 0°C gekennzeichnet.

Unter einem "in Epoxidharzen löslichen oder dispergierbaren Präpolymeren" versteht man im Rahmen dieser Beschreibung einen mit n Isocyanat-, Amino- oder Hydroxylgruppen terminierten Rest eines Präpolymeren, der nach der Verkappung dieser Gruppen zu einer Verbindung der Formel I führt, die in einem Epoxidharz (A) oder in einer Kombination eines Epoxidharzes (A) und eines Blockpolymeren (B) löslich oder ohne weitere Hilfsmittel, wie z.B. Emulgatoren, dispergierbar ist. Daher bildet sich eine homogene Phase oder es findet zumindest keine makroskopische Phasentrennung der Komponenten (A), (B) oder (C) oder eines Gemisches besagter Komponenten statt.

Die Löslichkeit oder Dispergierbarkeit von (C) in der Kombination von (A) und (B) wird in erster Linie durch die Auswahl geeigneter Präpolymerreste R¹ bewerkstelligt. Beispiele für geeignete Reste sind weiter unten bei der Herstellung der Komponente (C) gegeben.

Vorzugsweise handelt es sich bei der Verbindung der Formel I um eine wasserunlösliche Verbindung. Darunter versteht man im Rahmen dieser Beschreibung eine Verbindung, die sich zu weniger als 5 Gew.%, vorzugsweise weniger als 0,5 Gew.%, in Wasser löst, und die bei der Wasserlagerung nur eine geringe Menge Wasser aufnimmt, vorzugsweise weniger als 5 Gew.%, insbesondere weniger als 0,5 Gew.%, oder dabei lediglich eine geringe Quellung zeigt.

Die R¹ zugrundliegenden Präpolymeren besitzen in der Regel Molekulargewichte (Mₙ) von 150 bis 10000, vorzugsweise von 1800 bis 3000.

Die mittlere Funktionalität dieser Präpolymeren beträgt wenigstens zwei, vorzugsweise 2 bis 3, und besonders bevorzugt 2 bis 2,5.

Der Begriff "elastomeres Polyurethan" oder "elastomerer Polyharnstoff" ist dem Fachmann an sich bekannt (vergl. C. Hepburn: "Polyurethane Elastomers", Applied Science Publishers, London 1982).

Elastomere Polyurethane oder Polyharnstoffe enthalten im allgemeinen starre und flexible Anteile (Hart- und Weichsegmente).

Bei Komponente (C) kann es sich um flüssige oder um thermoplastische phenolterminierte Polyurethane oder Polyharnstoffe der Formel I handeln. Bevorzugt werden Verbindungen mit einer Erweichungstemperatur von weniger als 80°C, insbesondere weniger als 40°C.

Komponente (C) kann ebenfalls als ein Addukt eines phenol-terminierten Polyurethans oder Polyharnstoffs der Formel I an ein Epoxidharz eingesetzt werden. Solche Addukte können in der oben beschriebenen Weise hergestellt werden.

Für hochflexible Systeme werden Addukte solcher Polyurethane oder Polyharnstoffe mit Glycidylethern aliphatischer Diole, wie 1,4-Butandiol oder 1,6-Hexandiol, bevorzugt.

Geeignete Komponenten (C) können im wesentlichen linear sein oder es handelt sich um verzweigte Typen. Der Vernetzungsgrad wird so gewählt, dass das Polymer kein makroskopisches Gel bildet. Dies wird in der Regel dann der Fall sein, wenn Komponente (C) in einem polaren organischen Lösungsmittel oder in einem Epoxidharz löslich oder zumindest dispergierbar ist.

Die Verbindungen der Formel I, worin X -NR³- ist und Y -NR³- oder insbesondere -O- bedeutet, lassen sich je nach der Natur des R¹ zugrundeliegenden Präpolymeren, auf unterschiedlichen Wegen herstellen.

Im Falle von präpolymeren Isocyanaten lassen sie sich durch Umsetzung von Verbindungen der Formel IIIa mit Polyphenolen oder Aminophenolen der Formel IVa herstellen (Verfahren a)

R¹(̵NCO)ₙ (IIIa),

H-Y-R²(̵OH)ₘ (IVa);

Polyharnstoffe der Formel I, worin X -NR³- ist und Y -NR³- bedeutet, lassen sich auch durch Umsetzung von präpolymeren Aminen der Formel IIIb mit Urethanen der Formel IVb umsetzen (Verfahren b)

R¹(̵NR³H)ₙ (IIIb),

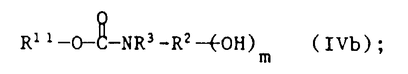

Verbindungen der Formel I, worin X -NR³- ist und Y -NR³- oder -O-bedeutet und mit ortho- oder peri-Phenolen oder -Aminophenolen als Endgruppen lassen sich auch durch Umsetzung von Verbindungen der Formel IIIb mit cyclischen Carbonaten oder Urethanen der Formel IVc herstellen (Verfahren c)

R¹(̵NR³H)ₙ (IIIb),

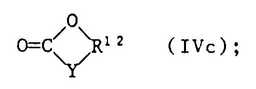

in diesen Formeln IIIa, IIIb, IVa, IVb und IVc besitzen die Reste R¹, R², R³ und Y sowie die Indizes m und n die weiter oben definierte Bedeutung, R¹¹ ist ein als Abgangsgruppe fungierender Rest, beispielsweise Alkyl oder Aryl, insbesondere C₁-C₆Alkyl oder Phenyl, und R¹² ist ein zweiwertiger carbocyclisch-aromatischer Rest mit einer der für R² definierten Bedeutungen, an dem die Gruppen -O- und -Y- sich jeweils in ortho- oder peri-Stellung zueinander befinden.

Die Verbindungen der Formel I, worin X -O- und Y -NR³- bedeutet, können in Analogie zu den in der EP-A-247,467 beschriebenen Verfahren erhalten werden.

Dazu setzt man beispielsweise ein in Epoxidharzen lösliches oder dispergierbares, elastomeres und hydroxyl-terminiertes Präpolymeres der Formel V mit einem dem OH-Gehalt des Präpolymeren entsprechenden Anteil eines Carbamates der Formel IVb, wie oben definiert um

R¹(̵OH)ₙ (V),

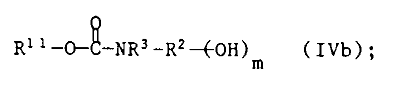

dabei besitzen die Reste R¹, R², R³ und R¹¹ sowie die Indizes m und n die oben definierte Bedeutung.

In einer weiteren Ausführungsform kann man das Präpolymere der Formel V zunächst mit einem dem OH-Gehalt entsprechenden Anteil an Phosgen umsetzen und das entstandene Chlorcarbonyloxyderivat anschliessend mit einem Phenol oder Aminophenol der Formel IVa umsetzen.

Der Rest R² leitet sich im allgemeinen von Phenolen oder Aminophenolen mit einem ein- oder mehrkernigen carbocyclisch-aromatischen Rest ab.

Phenol- oder Aminophenolreste mit mehreren carbocyclisch-aromatischen Resten können kondensiert oder bevorzugt über Brückenglieder verknüpft sein.

Beispiele für Phenole oder Aminophenole mit kondensierten Resten sind Dihydroxynaphthaline oder -anthracene oder Aminonaphthole.

Bevorzugte Reste R² leiten sich von Bisphenolen der Formel VI ab 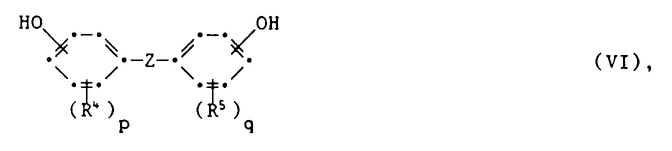 worin Z eine direkte C-C-Bindung ist oder ein Brückenglied ausgewählt aus der Gruppe bestehend aus -CR⁶R⁷-, -O-, -S-, -SO₂-, -CO-, -COO-, -CONR⁸-und -SiR⁹R¹⁰- ist, R⁴ und R⁵ unabhängig voneinander C₁-C₂₀Alkyl, C₂-C₆Alkenyl, C₂-C₆Alkinyl oder Halogen darstellen, p und q unabhängig voneinander 0, 1 oder 2 bedeuten, R⁶, R⁷ und R⁸ unabhängig voneinander Wasserstoff, -CF₃ oder C₁-C₆Alkyl sind oder R⁶ und R⁷ zusammen mit dem gemeinsamen C-Atom einen cycloaliphatischen Rest mit 5-12 Ring C-Atomen bilden und R⁹ und R¹⁰ C₁-C₆Alkyl bedeuten.

Besonders bevorzugte Reste R² leiten sich von Bisphenolen der Formel VI ab, worin die Hydroxylgruppen in 4,4'-Stellung gebunden sind; besonders die Derivate, worin p und q 1 sind und R⁴ und R⁵ Allyl bedeuten.

Weitere besonders bevorzugte Reste R² leiten sich von Bisphenolen der Formel VI ab, worin Z ausgewählt wird aus der Gruppe bestehend aus -CH₂-, -C(CF₃)₂-, -O-, -SO₂-, einer direkten C-C Bindung und besonders -C(CH₃)₂-, p und q jeweils 0 oder 1 sind und R⁴ und R⁵ C₁-C₆Alkyl, C₂-C₆Alkenyl, besonders Allyl, oder C₂-C₆Alkinyl, besonders Propargyl, bedeuten.

Weitere bevorzugte Reste R² leiten sich von einkernigen Aminophenolen, beispielsweise von 2-, 3- oder 4-Aminophenol oder von einkernigen Polyphenolen, beispielsweise von Resorcin, Hydrochinon oder Pyrogallol, ab.

Besonders bevorzugte Reste R² leiten sich von Bisphenolen ab; Beispiele dafür sind 4,4'-Dihydroxybiphenyl, Bis(4-hydroxyphenyl)ether, Bis(4-hydroxyphenyl)sulfon, Bis(4-hydroxyphenyl)methan, 2,2-Bis(4-hydroxyphenyl)propan sowie die entsprechenden 3,3'-Dimethyl-, 3,3'-Dinonyl-, oder 3,3'-Diallyl-, 3,3'-Dichlor-, 3,3'-Dibrom- und 3,3',5,5'-Tetrabromderivate dieser Verbindungen.

Bedeuten R⁴ oder R⁵ C₁-C₂₀Alkyl, so handelt es sich dabei um geradkettige oder verzweigte Reste. Beispiele dafür sind Methyl, Ethyl, n-Propyl, Isopropyl, n-Butyl, Isobutyl, tert.Butyl, n-Pentyl, n-Hexyl, 2-Ethylbutyl, n-Heptyl, n-Octyl, 2-Ethylhexyl, n-Nonyl, n-Decyl, n-Undecyl, n-Dodecyl, n-Tetradecyl, n-Hexadexyl, n-Octadecyl oder n-Eicosyl. Vorzugsweise sind R⁴ und R⁵ C₁-C₆Alkyl, besonders bevorzugt geradkettiges C1-C6Alkyl und ganz besonders bevorzugt Methyl.

Bedeuten irgendwelche Reste C₁-C₆Alkyl, so handelt es sich dabei vorzugsweise um geradkettige Reste, also um Methyl, Ethyl, n-Propyl, n-Butyl, n-Pentyl oder n-Hexyl, ganz besonders jedoch Methyl.

R⁴ und R⁵ bedeuten als C₂-C₆Alkenyl beispielsweise Vinyl, Allyl, 1-Propenyl, 1-Butenyl, 1-Pentenyl oder 1-Hexenyl. Bevorzugt werden Vinyl, 1-Propenyl und insbesondere Allyl.

R⁴ und R⁵ bedeuten als C₂-C₆Alkinyl beispielsweise Ethinyl, Propargyl, 1-Butinyl, 1-Pentinyl oder 1-Hexinyl. Bevorzugt wird Propargyl.

Sind R⁴ und R⁵ Halogen, so kann es sich dabei um Fluor, Chlor, Brom oder Iod handeln. Bevorzugt werden Chlor oder Brom, insbesondere Brom.

Verbindungen der Formel VI mit Alkyl- oder Alkenylsubstituenten verwendet man bevorzugt, wenn die erfindungsgemässe Zusammensetzung eine hohe Haftfestigkeit auf öligem Stahl aufweisen soll.

Halogenhaltige Verbindungen der Formel VI erhöhen im allgemeinen die Flammfestigkeit.

Bilden R⁶ und R⁷ zusammen mit dem gemeinsamen C-Atom einen cycloaliphatischen Rest, so handelt es sich dabei beispielsweise um einen Cyclopentyliden-, Cyclohexyliden-, Cycloheptyliden-, Cyclooctyliden- oder Cyclododecylidenrest. Bevorzugt werden Cyclohexyliden und Cyclododecyliden.

R³ ist vorzugsweise Wasserstoff.

Bei dem Isocyanat der Formel IIIa, handelt es sich entweder um ein Präpolymeres al), das sich ableitet von einer Addition eines Polyisocyanats, bevorzugt eines Di- oder Triisocyanats, ganz besonders bevorzugt eines Diisocyanats, an eine präpolymere Polyhydroxyl- oder Polysulfhydrylkomponente oder an ein Gemisch solcher präpolymerer Komponenten gegebenenfalls in Kombination mit Kettenverlängerern (kurzkettigen Polyhydroxyl-, Polysulfhydryl- oder Polyaminverbindungen), oder um ein präpolymeres Polyisocyanat a2), das sich ableitet von einem präpolymeren Polyamin der Formel IIIb, insbesondere von einem präpolymeren Polyetheramin.

Präpolymere Komponenten zur Herstellung von al) können Kondensations-oder Additionspolymere sein, die gegebenenfalls aufgepfropfte 1-Olefine enthalten können, wobei besagte 1-Olefine neben unpolaren auch polare Gruppen, wie Nitril-, Ester- oder Amidgruppen, aufweisen können. Beispiele für solche Polymere sind Polyester, Polyether, Polythioether, Polyacetate, Polyamide, Polyesteramide, Polyurethane, Polyharnstoffe, Alkydharze, Polycarbonate oder Polysiloxane, sofern diese Verbindungen hydroxyl- oder sulfhydryl-terminiert sind, zu in Epoxidharzen löslichen oder dispergierbaren Verbindungen der Formel I führen und diesen Elastomereigenschaften gemäss der obigen Definition verleihen.

Bevorzugt sind Polyether oder segmentierte Präpolymere enthaltend Polyethersegmente, wie Polyether-amide, Polyether-urethane und Polyetherharnstoffe.

Diese Verbindungen sind dem Fachmann auf dem Gebiet der Polyurethanchemie als Aufbaukomponenten für Polyurethane bekannt. Sie können linear oder verzweigt sein; bevorzugt werden lineare Typen.

Bevorzugte Aufbaukomponenten für Präpolymere al) sind hydroxyl-terminierte Präpolymere mit mittleren Molekulargewichten (Mₙ) von 150-10000, ganz besonders von 500-3000.

Bei der Herstellung der präpolymeren Polyisocyanate a1) können neben den hydroxyl- oder sulfhydryl-terminierten Präpolymeren auch noch Kettenverlängerer anwesend sein.

Solche Monomeren sind bevorzugt difunktionell oder trifunktionell.

Verwendet man tri- oder höherfunktionell hydroxyl- oder sulfhydrylterminierte Präpolymere oder tri- oder höherfunktionelle Kettenverlängerer zur Herstellung der Komponente a1), so sind die Aufbaukomponenten so zu wählen, dass ein in organischen Lösungsmitteln lösliches oder zumindest quellbares Addukt a1) entsteht.

Der Vernetzungsgrad bei der Verwendung höherfunktioneller Aufbaukomponenten kann in an sich bekannter Weise durch Art und Mengenverhältnisse dieser Komponenten geregelt werden. Durch den Vernetzungsgrad können auch die Elastomereigenschaften in an sich bekannter Weise variiert werden.

So wird bei Einsatz von difunktionellen Präpolymeren und tri- oder höherfunktionellen Kettenverlängerern in der Regel nur ein geringer Anteil der höherfunktionellen Komponente eingesetzt, während bei der Kombination von di- und tri- oder höherfunktionellen Präpolymeren in der Regel eine grössere Menge des höherfunktionellen Kettenverlängerers anwesend sein kann, ohne dass eine übermässige Vernetzung eintritt. Ferner wird der Vernetzungsgrad auch von der Funktionalität des Polyisocyanates abhängen. So wird man bei Anwesenheit von tri- oder höherfunktionellen hydroxyl- oder sulfhydryl-terminierten Aufbaukomponenten in der Regel Diisocyanate einsetzen, während man bei der Verwendung von difunktionellen hydroxyl- oder sulfhydryl-terminierten Aufbaukomponenten auch höherfunktionelle Isocyanate verwendet. Beispiele für präpolymere Aufbaukomponenten zur Herstellung von Polyisocyanaten al) sind hydroxyl-terminierte Polyether, insbesondere solche Polyether, die zu wasserunlöslichen Verbindungen der Formel I führen.

Dazu zählen beispielsweise die Polyalkylenetherpolyole, die durch anionische Polymerisation, Copolymerisation oder Blockcopolymerisation von Alkylenoxiden, wie Ethylenoxid, Propylenoxid oder Butylenoxid, mit di- oder polyfunktionellen Alkoholen, wie 1,4-Butandiol, 1,1,1-Trimethylolethan, 1,1,1-Trimethylolpropan, 1,2,6-Hexantriol, Glycerin, Pentaerithrit oder Sorbit, oder mit Aminen, wie Methylamin, Ethylendiamin oder 1,6-Hexylendiamin, als Starterkomponenten oder durch kationische Polymerisation oder Copolymerisation cyclischer Ether, wie Tetrahydrofuran, Ethylenoxid oder Propylenoxid mit sauren Katalysatoren, wie BF₃·Etherat oder durch Polykondensation von unter Wasserabspaltung polykondensierbaren Glykolen, wie 1,6-Hexandiol, in Gegenwart saurer Veretherungskatalysatoren, wie p-Toluolsulfonsäure, erhalten werden. Ferner kann man auch Oxalkylierungsprodukte von Phosphorsäure oder phosphoriger Säure mit Ethylenoxid, Propylenoxid, Butylenoxid oder Styroloxid verwenden.

Weitere bevorzugte hydroxyl-terminierte Polyether enthalten aufgepfropfte 1-Olefine, wie Acrylnitril, Styrol oder Acrylsäureester. Dabei beträgt der Gewichtsanteil der Pfropfkomponente in der Regel 10-50 %, insbesondere 10-30 %, bezogen auf die Menge des eingesetzten Polyethers.

Weitere Beispiele für präpolymere Aufbaukomponenten zur Herstellung von Polyisocyanaten al) sind hydroxyl-terminierte Polyesterpolyole, die sich von Di- und/oder Polycarbonsäuren und Di- und/oder Polyolen, bevorzugt von Dicarbonsäuren und Diolen ableiten.

Beispiele für solche Polykondensate sind die hydroxyl-terminierten Polyester, die sich durch Polykondensation von Adipinsäure, Sebazinsäure, Azelainsäure, Dimer- und Trimerfettsäuren, Phthalsäure, Isophthalsäure, Terephthalsäure, Tetrahydrophthalsäure, Hexahydrophthalsäure und Endomethylentetrahydrophthalsäure mit Propylenglykol, 1,4-Butandiol, 1,6-Hexandiol, Di-, Tri- und Tetraethylenglykol, Di-, Tri- und Tetrapropylenglykol, Di-, Tri- und Tetrabutylenglykol, 2,2-Dimethylpropan-1,3-diol, 1,1,1-Trimethylolpropan, 1,1,1-Trimethylolethan und 1,2,6-Hexantriol erhalten lassen.

Weitere geeignete präpolymere Aufbaukomponenten zur Herstellung von Polyisocyanaten a1) sind hydroxyl-terminierte Polybutadiene, die insbesondere zusammen mit hydroxyl-terminierten Polyethern zur Bildung der Komponente a1) umgesetzt werden.

Weitere Beispiele für geeignete präpolymere Aufbaukomponenten zur Herstellung von Polyisocyanaten a1) sind Polymerisationsprodukte von Lactonen, beispielsweise von ε-Caprolacton; oder Polyalkylenthioetherpolyole, beispielsweise die Polykondensationsprodukte des Thiodiglykols mit sich und mit Diolen und/oder Polyolen, wie beispielsweise 1,6-Hexandiol, Triethylenglykol, 2,2-Dimethyl-1,3-propandiol oder 1,1,1-Trimethylolpropan.

Bevorzugte präpolymere Aufbaukomponenten zur Herstellung von Polyisocyanaten al) sind hydroxyl-terminierte Polyether oder Polyester.

Weitere bevorzugte präpolymere Aufbaukomponenten zur Herstellung von Polyisocyanaten al) sind Gemische von hydroxyl-terminiertem Polybutadien und hydroxyl-terminiertem Polyalkylenglykol oder hydroxyl-terminierte Polyalkylenglykole enthaltend aufgepfropfte 1-Olefine, insbesondere Styrol oder Acrylsäurederivate, wie Acrylsäureester oder Acrylnitril.

Ganz besonders bevorzugte präpolymere Aufbaukomponenten zur Herstellung von Polyisocyanaten al) sind hydroxylterminierte Polyether, insbesondere dihydroxyl-terminierte Polyalkylenglykole.

Kettenverlängerer zur Herstellung des präpolymeren Polyisocyanats al) sind an sich bekannt. Beispiele dafür sind die weiter oben zur Herstellung der hydroxyl-terminierten Polyether erwähnten Diole und Polyole, insbesondere die Diole und Triole, wie 1,4-Butandiol, 1,1,1-Trimethylolpropan oder Hydrochinon-(2-hydroxyethylether), oder auch Diamine, wie Diaminoethan, 1,6-Diaminohexan, Piperazin, 2,5-Dimethylpiperazin, 1-Amino-3-aminomethyl-3,5,5-trimethylcyclohexan, 4,4'-Diaminocyclohexylmethan, 1,4-Diaminocyclohexan und 1,2-Propylendiamin oder auch Hydrazin, Aminosäurehydrazide, Hydrazide von Semicarbazidocarbonsäuren, Bis-hydrazide und Bis-semicarbazide.

Vorzugsweise verwendet man kurzkettige Diole oder Triole als Kettenverlängerungsmittel.

Das präpolymere Polyisocyanat a2) lässt sich in an sich bekannter Weise aus amino-terminierten Präpolymeren der Formel IIIb, insbesondere aus amino-terminierten Polyethern durch Umsetzung mit Phosgen oder mit Polyisocyanaten, bevorzugt mit Di- oder Triisocyanaten, besonders bevorzugt mit Diisocyanaten erhalten. Die amino-terminierten Präpolymeren enthalten neben den Aminogruppen im allgemeinen keine weiteren Reste mit aktiven Wasserstoffatomen. Präpolymere mit terminalen Aminogruppen leiten sich im allgemeinen von den weiter oben als Aufbaukomponente für a1) beschriebenen hydroxyl-terminierten Kondensations- oder Additionspolymeren, insbesondere von Polyethern ab.

Sie lassen sich erhalten, indem man besagte Kondensations- oder Additionspolymere enthaltend sekundäre Hydroxylgruppen mit Ammoniak umsetzt oder indem man besagte Kondensations- oder Additionspolymere enthaltend primäre Hydroxylgruppen, beispielsweise Polybutylenglykol, mit Acrylnitril umsetzt, und diese Produkte anschliessend hydriert.

Präpolymeres, amino-terminiertes Poly-THF lässt lassen sich auch gemäss S. Smith et al. in Macromol. Sci. Chem., A7(7), 1399-1413 (1973) durch Abbrechen eines difunktionellen lebenden kationischen THF-Polymers mit Kaliumcyanat erhalten.

Als Polyisocyanat zur Herstellung der Komponenten al) bzw. a2) verwendet man in der Regel aliphatische, cycloaliphatische, aromatische oder araliphatische Di-, Tri- oder Tetraisocyanate oder in solche Isocyanate überführbare Vorläufer.

Bevorzugt werden die aliphatischen, cycloaliphatischen oder araliphatischen Di- oder Triisocyanate, ganz besonders die aliphatischen oder cycloaliphatischen Diisocyanate.

Bei den bevorzugten aliphatischen Diisocyanaten handelt es sich in der Regel um geradkettige oder verzweigte α,ω-Diisocyanate. Die Alkylenketten können gegebenenfalls durch Sauerstoff- oder Schwefelatome unterbrochen sein und können gegebenenfalls ethylenisch ungesättigte Bindungen enthalten.

Bevorzugt werden α,ω-Diisocyanate mit geradkettigen, gesättigten C₂-C₂₀ Alkylenresten.

Beispiele für solche Reste sind Ethylen, Tri-, Tetra-, Penta-, Hexa-, Hepta-, Octa-, Deca-, Dodeca-, Tetradeca-, Hexadeca-, Octadeca- und Eicosamethylen.

Beisiele für bevorzugte, durch Heteroatome unterbrochene aliphatische α,ω-Diisocyanatreste sind -(CH₂-CH₂-O 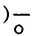 CH₂-CH₂-, -(CH(CH₃)-CH₂-O 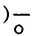 CH(CH₃)-CH₂-, -(CH₂-CH₂-CH₂-CH₂-O 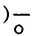 CH₂-CH₂-CH₂-CH₂- und -(CH₂-CH₂-S 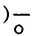 -CH₂-CH₂-, worin o 1 bis 20 beträgt.

Bei den bevorzugten cycloaliphatischen Diisocyanaten handelt es sich in der Regel um Derivate, die sich von gegebenenfalls substituierten Cyclopentanen, Cyclohexanen oder Cycloheptanen ableiten. Es können auch zwei solche Ringe über ein Brückenglied miteinander verbunden sein.

Beispiele für solche Reste sind 1,3- und 1,4-Cyclohexylen oder Dodecahydrodiphenylmethan-4,4'-diyl.

Ferner kann man Di- oder Triisocyanate verwenden, die sich von Dimer-oder Trimerfettsäuren ableiten. Diese Verbindungen lassen sich in an sich bekannter Weise aus den Fettsäuren durch Umlagerung in die entsprechenden Di- oder Triisocyanate erhalten (Hoffmann-, Curtius- oder Lossen-Umlagerungen).

Beispiele für bevorzugte aromatische Diisocyanate entsprechen den weiter oben für zweiwertige Phenolreste gegebenen Beispielen, bei denen die -OH-Gruppen durch -NCO-Gruppen ausgetauscht sind.

Beispiele für araliphatische Diisocyanatreste sind 1,2- und 1,4-Xylylen.

Spezifische Beispiele für geeignete Polyisocyanate sind 2,4-Diisocyanatotoluol sowie dessen technische Gemische mit 2,6-Diisocyanatotoluol, 1,5-Diisocyanatonaphthalin, 4,4'-Diisocyanatodiphenylmethan sowie technische Gemische verschiedener Diisocyanatodiphenylmethane (beispielsweise der 4,4'- und 2,4-Isomeren), urethanisiertes 4,4'-Diisocyanatodiphenylmethan, carbodiimidisiertes 4,4'-Diisocyanatodiphenylmethan, das Uretdion des 2,4-Diisocyanatotoluols, Triisocyanatotriphenylmethan, das Addukt aus Diisocyanatotoluol und Trimethylolpropan, das Trimerisat aus Diisocyanatotoluol, Diisocyanato-m-xylylen, N,N'-Di-(4-methyl-3-isocyanatophenyl)harnstoff, Mischtrimerisationsprodukte von Diisocyanatotoluol und 1,6-Diisocyanatohexamethylen, 1,6-Diisocyanatohexan, 3,5,5-Trimethyl-1-isocyanatomethylcyclohexan (Isophorondiisocyanat), N,N',N"'-Tri-(6-isocyanatohexyl)-biuret, 2,2,4-Trimethyl-1,6-diisocyanatohexan, 1-Methyl-2,4-diisocyantocyclohexan, Dimeryldiisocyanat, 4,4'-Diisocyanatodicyclohexylmethan, trimeres Isophorondiisocyanat, trimeres Hexandiisocyanat und 2,6-Diisocyanatohexansäuremethylester.

Die Herstellung der Komponente al) bzw. a2) erfolgt in an sich bekannter Weise durch Umsetzung der hydroxyl-, sulfhydryl- oder amino-terminierten elastomeren Präpolymerkomponente mit einem Polyisocyanat oder einem Gemisch dieser Komponenten. Die Umsetzungen können gegebenenfalls in Gegenwart eines Kettenverlängerers, vorgenommen werden.

Die Herstellung der Komponente a1) bzw. a2) erfolgt in Substanz oder in gegenüber Isocyanaten inerten Lösungsmitteln.

Beispiele für inerte Lösungsmittel sind Ester, wie Ethylacetat, Butylacetat, Methylglykolacetat und Ethylglykolacetat; Ketone, wie Methylethylketon oder Methylisobutylketon; Aromaten, wie Toluol oder Xylol oder halogenierte Kohlenwasserstoffe, wie Trichlorethan oder Dichlormethan.

Nimmt man eine bestimmte zusätzliche Kettenverlängerungsreaktion über Urethan- oder Harnstoffgruppen in Kauf oder ist diese sogar erwünscht, so setzt man die hydroxyl-, sulfhydryl- oder aminogruppenhaltigen Präpolymeren und die gegebenenfalls anwesenden Monomeren gegebenenfalls zunächst bei 0-25°C und unter Kühlung und später gegebenenfalls über mehrere Stunden unter Erwärmung auf vorzugsweise 50-120°C in einem NCO/OH- bzw. NCO/SH- bzw. NCO/NH2-Verhältnis von 1,5-2,5, bevorzugt 1,8-2,2, mit dem Di- oder Polyisocyanat um.

Ist eine Kettenverlängerungsreaktion nicht erwünscht, so verwendet man in der Regel einen wesentlich grösseren Ueberschuss an Di- oder Polyisocyanat, beispielsweise ein NCO/OH-, NCO/SH- oder NCO/NH₂-Verhältnis von 3-5, und keinen Kettenverlängerer, und verfährt ansonsten wie bei niedrigen NCO/OH-, NCO/SH- oder NCO/NH2-Verhältnissen beschrieben. Nach der Reaktion wird gegebenenfalls das überschüssige Di- oder Polyisocyanat entfernt, beispielsweise durch Dünnschichtdestillation oder durch Lösungsmittelextraktion.

Die Umsetzung der hydroxyl-, sulfhydryl- oder amino-terminierten Präpolymeren mit Polyisocyanaten wird in Gegenwart an sich bekannter Katalysatoren durchgeführt.

Beispiele dafür sind Diazabicyclooctan, Dibutylzinndilaurat oder Zinn-II-octoat. Diese Katalysatoren werden in den üblichen Mengen eingesetzt, beispielsweise in Mengen von 0,001-2 Gew.-%, bezogen auf die Menge an Polyisocyanat.

Die Reaktion der Komponenten al) oder a2) (Polyisocyanat IIIa) mit dem Phenol oder Aminophenol IVa erfolgt in Analogie zur oben beschriebenen Umsetzung der hydroxyl-, sulfhydryl- oder amino-terminierten Aufbaukomponente mit dem Polyisocyanat.

Das Polyphenol oder Aminophenol IVa wird dabei bevorzugt in einer solchen Menge vorgelegt, dass die freien NCO-Gruppen im wesentlichen durch die Reaktion verbraucht werden, und dass pro Polyphenol oder Aminophenol vorwiegend eine OH- bzw. NH₂-Gruppe reagiert.

Dies wird in der Regel dann der Fall sein, wenn auf 1 Mol freie Isocyanatgruppen etwa zwei bzw. drei Mol OH-Gruppen des Bis- oder Trisphenols oder etwa ein Mol NH₂-Gruppen des Aminophenols vorgelegt werden.

Im Falle der Polyphenole IVa beträgt das Verhältnis von OH:NCO im allgemeinen 1,5:1,0 bis 3,0:1,0, vorzugsweise 1,8:1,0 bis 2,5:1,0.

Im Falle der Aminophenole IVa beträgt das Verhältnis von NH₂:NCO im allgemeinen 0,8:1,0 bis 1,2:1,0, bevorzugt 0,8:1,0 bis 1,0:1,0.

Natürlich können auch Ueberschussmengen der Komponente IVa eingesetzt werden, wobei Kettenverlängerung über das Phenol eintreten kann, doch sollte das Endprodukt nicht mehr als 50 Gew.-%, bevorzugt weniger als 10 Gew.% bezogen auf die Gesamtmischung an unreagierter Komponente IVa aufweisen.

Im Fall der Aminophenole IVa ist im allgemeinen eine stöchiometrische Menge erwünscht.

Zur Verkappung des Polyisocyanats IIIa können auch Gemische aus Phenol und/oder Aminophenol IVa eingesetzt werden. Diese Gemische können ferner geringe Anteile an Monophenolen enthalten. Bei dieser Variante wird der Monophenolanteil so gewählt, dass das Reaktionsprodukt hauptsächlich aus Verbindungen der Formel I mit freien phenolischen OH-Gruppen besteht.

Bei den amino-terminierten Präpolymeren IIIb in Verfahren b) oder c) handelt es sich in der Regel um die präpolymeren Polyamine, die bereits in Verfahren a) beschrieben wurden, und die dort zur Herstellung der präpolymeren Polyisocyanatkomponenten IIIa eingesetzt wurden. Bevorzugte Verbindungen IIIb sind amino-terminierte Polyether, wie oben definiert.

Die Urethane IVb leiten sich von Aminophenolen HR³N-R²-(OH)ₘ ab, worin R², R³ und m die oben definierte Bedeutung besitzen. Zur Herstellung von Urethanen IVb verkappt man diese Aminophenole in an sich bekannter Weise mit R¹¹-O-CO-Cl. Dabei besitzt R¹¹ die weiter oben definierte Bedeutung. Die Umsetzung der Komponenten IIIb und IVb (Verfahren b) erfolgt im allgemeinen durch Vorgabe eines stöchiometrischen Verhältnisses beider Komponenten oder eines geringen Ueberschusses an Komponente IVb und durch Erhitzen des Gemisches, so dass praktisch alle freien Aminogruppen von IIIb verkappt werden.

Die Reaktion wird bevorzugt in einem inerten Lösungsmittel ausgeführt. Beispiele dafür sind weiter oben aufgelistet.

Die cyclischen Carbonate oder Urethane IVc leiten sich von ortho- oder peri-Bisphenolen bzw. Aminophenolen der Formel HO-R¹²-OH bzw. HR³N-R¹²-OH ab. Dabei besitzen R³ und R¹² die weiter oben definierte Bedeutung. Die Verbindungen IVc lassen sich daraus durch Umsetzung mit Phosgen erhalten. Die Umsetzung der Komponenten IIIb und IVc (Verfahren c) erfolgt im allgemeinen durch Vorgabe eines stöchiometrischen Verhältnisses beider Komponenten oder eines geringen Ueberschusses an Komponente IVc. Ansonsten wird die Reaktion wie bei Verfahren a) beschrieben durchgeführt.

Das Molekulargewicht Mₙ der Polyurethane oder Polyharnstoffe (C) liegt üblicherweise im Bereich von 500-50'000, vorzugsweise im Bereich von 500-10'000, ganz besonders bevorzugt im Bereich von 500-3000.

Die Viskosität dieser Verbindungen beträgt in der Regel weniger als 150000 mPas, vorzugsweise weniger als 100000 mPas (gemessen bei 80°C mit dem Epprecht Viskosimeter).

Die Strukturen der phenol-terminierten Polyurethane oder Polyharnstoffe der Formel I, welche sich von der Umsetzung gemäss Verfahren a), b) oder c) ableiten, werden sich, je nach der Funktionalität des Präpolymerrestes R¹, unterscheiden.

In Verfahren a) wird diese Funktionalität beispielsweise durch die Funktionalität der hydroxyl-, sulfhydryl- oder amino-terminierten Präpolymeren, durch gegebenenfalls eingesetzte Kettenverlängerer, die Funktionalität des zur Herstellung von IIIa verwendeten Isocyanats und die Mengenverhältnisse der einzelnen Reaktanden bestimmt. Bevorzugte Komponenten (C) sind Verbindungen der Formel I, worin X -NH-ist und Y -NH-, ganz besonders bevorzugt jedoch -O-, bedeutet. Ebenfalls bevorzugte Komponenten (C) sind Verbindungen der Formel I, die im wesentlichen frei von Isocyanatgruppen sind und wenigstens zwei freie phenolische Hydroxylgruppen aufweisen und die erhältlich sind durch Umsetzung von
a) einem präpolymeren Polyisocyanat, welches
   a1) ein Addukt eines Polyisocyanats an eine präpolymere Polyhydroxyl-oder Polysulfhydrylverbindung oder an ein Gemisch solcher Verbindungen gegebenenfalls in Kombination mit einem Kettenverlängerer ist, oder
   a2) sich ableitet von einem präpolymeren Polyetheramin, mit
b) mindestens einem Phenol mit zwei oder drei phenolischen Hydroxylgruppen oder mit einem Aminophenol mit einer oder zwei phenolischen Hydroxylgruppen.

Besonders bevorzugte Verbindungen der Formel I leiten sich von präpolymeren Polyisocyanaten a) ab, die eine mittlere Isocyanatfunktionalität von 2 bis 3 besitzen.

Besonders bevorzugt werden Verbindungen der Formel I, worin Komponente a1) ein Addukt eines Polyisocyanats an ein hydroxyl-terminiertes Präpolymeres mit einem mittleren Molekulargewicht Mₙ von 150 bis 10000 ist. Ganz besonders bevorzugt werden Verbindungen der Formel I, worin die Aufbaukomponente zur Herstellung von Komponente al) ein hydroxyl-terminierter Polyether oder Polyester ist.

Diese Aufbaukomponente zur Herstellung von Komponente al) wird vorzugsweise in Kombination mit Kettenverlängern eingesetzt.

Ganz besonders bevorzugt werden Verbindungen der Formel I, worin das Polyisocyanat zur Herstellung von Komponente a1) ein aliphatisches, cycloaliphatisches, aromatisches oder araliphatisches Di- oder Triisocyanat ist.

In einer bevorzugten Ausführungsform arbeitet man bei der Herstellung der Komponente al) mit einem hydroxyl-terminierten Polyether oder Polyester in Abwesenheit eines Kettenverlängerers und mit einer dem OH-Gehalt äquivalenten oder überschüssigen Menge an Polyisocyanat und erhält nach dem Verkappen mit dem Polyphenol bzw. Aminophenol Polyurethane der Formel VII 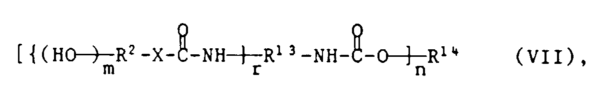 worin R², m und n die oben definierte Bedeutung besitzen, r eine ganze Zahl zwischen 1 und 3 ist, X -O- oder -NH- bedeutet, R¹³ der r+1-wertige Rest eines aliphatischen, cycloaliphatischen, aromatischen oder araliphatischen Polyisocyanates nach dem Entfernen der Isocyanatgruppen ist, R¹⁴ ein n-wertiger hydroxyl-terminierter Polyester- oder Polyetherrest nach dem Entfernen der endständigen OH-Gruppen ist, mit der Massgabe, dass der Index m und die Reste R² und R¹³ innerhalb eines gegebenen Moleküls unterschiedlich sein können.

Bevorzugt werden Zusammensetzungen enthaltend als Komponente (C) Verbindungen der Formel VII.

Der Index m ist vorzugsweise 1. Der Index n ist vorzugsweise 2 oder 3, ganz besonders bevorzugt 2. Der Index r ist vorzugsweise 1.
Bevorzugte Komponenten (C) sind Verbindungen der Formel VII, worin m 1 ist, n 2 oder 3 bedeutet, r 1 ist, X -O- ist, R¹³ sich ableitet von einem aliphatischen, cycloaliphatischen oder aromatischen Diisocyanat und R¹⁴ ein zwei- oder dreiwertiger Rest eines hydroxyl-terminierten Polyesters oder Polyethers mit einem Molekulargewicht Mₙ von 150 bis 10000 nach dem Entfernen der endständigen Hydroxylgruppen ist.

Ganz besonders bevorzugte Komponenten (C) sind Verbindungen der Formel VII, worin m 1 ist, n 2 oder 3 bedeutet, r 1 ist, X -O- ist, R¹³ sich ableitet von einem aliphatischen oder cycloaliphatischen Diisocyanat und R¹⁴ ein zwei- oder dreiwertiger Rest eines Polyalkylenetherpolyols mit einem Molekulargewicht Mₙ von 150 bis 3000 nach dem Entfernen der endständigen Hydroxylgruppen ist.

Zu den besonders bevorzugten Komponenten (C) dieses zuletzt definierten Typs zählen diejenigen, worin n 2 bedeutet und R¹⁴ ein Strukturelement der Formel VIII ist

-(CₛH₂ₛ-O-)ₓ-CₛH₂ₛ- (VIII)

worin s 3 oder 4 bedeutet, x eine ganze Zahl von 5 bis 40 ist und die Einheiten -CₛH₂ₛ-O- innerhalb eines gegebenen Strukturelementes der Formel VIII im Rahmen der gegebenen Definitionen unterschiedlich sein können.

Beispiele für Strukturelmente der Formel VIII sind -(CH₂-CH(CH₃)-O)ₓ-CH₂CH(CH₃)- , -(CH₂-CH₂-CH₂-CH₂-O)ₓ-CH₂CH₂CH₂-CH₂-sowie Copolymere enthaltend diese Strukturlemente.

Zu den ebenfalls bevorzugten Komponenten (C) dieser Erfindung zählen Verbindungen, die erhältlich sind durch Umsetzung von
a1) einem Addukt einer im wesentlichen äquivalenten Menge eines Diisocyanates mit einem Gemisch aus einem di- oder tri-hydroxyl-terminierten Polyether oder Polyester und weniger als 1 Mol-%, bezogen auf das hydroxyl-terminierte Präpolymere, eines Diols oder Triols, vorzugsweise eines kurzkettigen Diols oder Triols, und
b) einer dem NCO-Gehalt im wesentlichen äquivalenten Menge eines Bisphenols oder Trisphenols.

In einer weiteren bevorzugten Ausführungsform arbeitet man bei der Herstellung der Komponente a2) mit einem amino-terminierten Polyalkylenether, setzt diesen in Abwesenheit eines Kettenverlängerers mit einer dem NH₂-Gehalt äquivalenten oder überschüssigen Menge an Diisocyanat oder mit Phosgen um und verkappt das erhaltene Polyisocyanat mit einem Polyphenol oder Aminophenol IIIa. Man erhält eine Verbindung der Formel IX 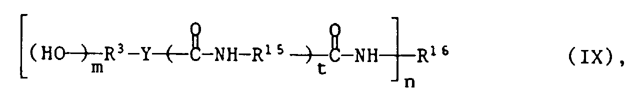 worin R³, Y, m und n die oben definierte Bedeutung besitzen, t 0 oder 1 ist, R¹⁵ der zweiwertige Rest eines aliphatischen, cycloaliphatischen, aromatischen oder araliphatischen Diisocyanats nach dem Entfernen der Isocyanatgruppen ist und R¹⁶ der n-wertige Rest eines amino-terminierten Polyalkylenethers nach dem Entfernen der endständigen NH₂-Gruppen ist.

Zusammensetzungen enthaltend Verbindungen der Formel IX als Komponente (C) werden bevorzugt.

Besonders bevorzugte Zusammensetzungen enthalten Verbindungen der Formel IX als Komponente (C), worin m 1 ist, n 2 oder 3 bedeutet, Y -O-ist, R¹⁵ sich ableitet von einem aliphatischen, cycloaliphatischen oder aromatischen Diisocyanat und R¹⁶ ein zwei- oder dreiwertiger Rest eines amino-terminierten Polyalkylenethers mit einem Molekulargewicht Mₙ von 150 bis 10000 nach dem Entfernen der endständigen Aminogruppen ist.

Ganz besonders bevorzugte Zusammensetzungen enthalten Verbindungen der Formel IX als Komponente (C), worin m 1 ist, n 2 bedeutet, t 0 ist, Y -O-bedeutet und R¹⁶ sich ableitet von einem zweiwertigen amino-terminierten Polyalkylenether mit einem Molekulargewicht Mₙ von 150 bis 6000.

Ganz besonders bevorzugte Zusammensetzungen enthalten Verbindungen der Formel IX als Komponente (C), worin m und t 1 sind, n 2 bedeutet, R¹⁵ der zweiwertige Rest eines aliphatischen oder cycloaliphatischen Diisocyanats nach dem Entfernen der Isocyanatgruppen ist und R¹⁶ sich ableitet von einem zweiwertigen amino-terminierten Polyalkylenether mit einem Molekulargewicht Mₙ von 150 bis 6000.

Zu den besonders bevorzugten Komponenten (C) dieser beiden zuletzt definierten Typen zählen diejenigen, worin R¹⁶ ein Strukturelement der Formeln X, XI, XII oder XIII ist 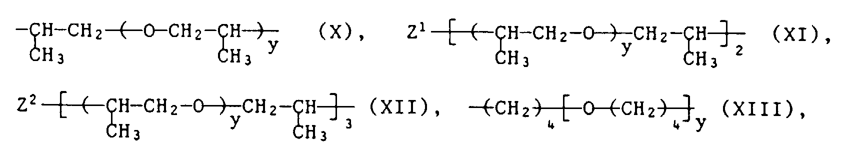 worin y 2 bis 70 ist, Z¹ eine Gruppe -NH-CO-NH- oder -O-R¹⁷-O- ist, Z² eine Gruppe 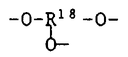 ist, R¹⁷ ein Rest eines aliphatischen Diols nach dem Entfernen der beiden OH-Gruppen ist und R¹⁸ ein Rest eines aliphatischen Triols nach dem Entfernen der drei OH-Gruppen ist.

Die Herstellung der erfindungsgemässen Zusammensetzungen kann in üblicher Weise durch Vermischen der Komponenten mit Hilfe bekannter Mischaggregate (Rührer, Walzen) erfolgen.

Die erfindungsgemässen Zusammensetzungen lassen sich unter Verwendung üblicher Härtungsmittel für Epoxidharze zu vernetzten Produkten aushärten. Gegenstand der Erfindung sind somit auch Zusammensetzungen, welche zusätzlich zu den oben beschriebenen Komponenten (A), (B) und (C) noch (D) einen Härter für Epoxidharze und gegebenenfalls (E) einen Härtungsbeschleuniger enthalten.

Beispiele für Härter (D) sind aliphatische, cycloaliphatische, aromatische und heterocyclische Amine, wie Bis(4-aminophenyl)methan, Anilin-Formaldehyd-Harze, Bis(4-aminophenyl)sulfon, Propan-1,3-diamin, Hexamethylendiamin, Diethylentriamin, Triethylentetramin, 2,2,4-Trimethylhexan-1,6-diamin, m-Xylylendiamin, Bis(4-aminocyclohexyl)methan, 2,2-Bis(4-aminocyclohexyl)propan und 3-Aminomethyl-3,5,5-trimethylcyclohexylamin (Isophorondiamin); Polyaminoamide, wie beispielsweise solche aus aliphatischen Polyaminen und dimerisierten oder trimerisierten Fettsäuren; Polyphenole, wie Resorcin, Hydrochinon, 2,2-Bis(4-hydroxyphenyl)propan (Bisphenol A) und Phenol-Aldehyd-Harze; Polythiole, wie die im Handel unter der Bezeichnung "Thiokole®" erhältlichen Polythiole; Polycarbonsäuren und ihre Anhydride, wie z.B. Phthalsäureanhydrid, Tetrahydrophthalsäureanhydrid, Hexahydrophthalsäureanhydrid, Hexachlor-endomethylentetrahydrophthalsäureanhydrid, Pyromellitsäuredianhydrid, Benzophenon-3,3',4,4'-tetracarbonsäuredianhydrid, die Säuren der zuvorgenannten Anhydride sowie auch Isophthalsäure und Terephthalsäure. Es können auch katalytisch wirkende Härtungsmittel verwendet werden, wie beispielsweise tertiäre Amine [z.B. 2,4,6-Tris(dimethylaminoethyl)phenol]; Imidazole oder Mannichbasen; Alkalimetallalkoholate (z.B. Na-Alkoholat von 2,4-Dihydroxy-3-hydroxymethylpentan); Zinnsalze von Alkansäuren (z.B. Zinnoctanoat); Friedel-Crafts-Katalysatoren, wie Bortrifluorid und Bortrichlorid und ihre Komplexe und Chelate, die durch Umsetzung von Bortrifluorid mit z.B. 1,3-Diketonen erhalten werden; sowie substituierte Cyanamide, wie Dicyandiamid.

Beispiele für Härtungsbeschleuniger (E) sind tertiäre Amine, deren Salze oder quaternäre Ammoniumverbindungen, wie Benzyldimethylamin, 2,4,6-Tris(dimethylaminomethyl)phenol, 1-Methylimidazol, 2-Ethyl-4-methylimidazol, 4-Aminopyridin, Tripentylammoniumphenolat oder Tetramethylammoniumchlorid; oder Alkalimetallalkoholate, wie Na-Alkoholate von 2,4-Dihydroxy-3-hydroxymethylpentan; oder substituierte Harnstoffe, wie N-(4-Chlorphenyl)-N',N'-dimethylharnstoff oder N-(3-Chlor-4-methylphenyl)-N',N'-dimethylharnstoff (Chlortoluron).

Ueberraschenderweise lässt sich eine Zusammensetzung enthaltend einen hohen Anteil an Komponenten (B) und (C), beispielsweise mehr als 50 Gew.%, bezogen auf die Mengen an (A), (B) und (C) aushärten.

Die Härtung der erfindungsgemässen Zusammensetzungen kann bei Raumtemperatur oder bei höheren Temperaturen vorgenommen werden.

Im allgemeinen liegen die Härtungstemperaturen bei der Heisshärtung zwischen 80 und 250°C, bevorzugt zwischen 100 und 180°C. Die Härtung kann gewünschtenfalls auch in zwei Stufen vorgenommen werden, indem man z.B. den Härtungsvorgang unterbricht oder, falls man ein Härtungsmittel für höhere Temperaturen einsetzt, die härtbare Mischung bei tieferen Temperaturen teilweise härten lässt. Die dabei erhaltenen Produkte sind noch schmelzbare und lösliche Präkondensate (sogenannte "B-Stufenharze") und eignen sich z.B. für Pressmassen, Sinterpulver oder Prepregs.

Die Komponenten (B) und insbesondere auch (C) der erfindungsgemässen Gemische bewirken eine signifikante Erhöhung der Schälfestigkeit, und die gehärteten Produkte weisen eine verringerte Tendenz zur Rissfortpflanzung und hohe Schälfestigkeiten ohne Verlust der Zugscherfestigkeit auf.

Ferner lassen sich mit diesen Modifikatoren, je nach Harzformulierung, elastische Produkte mit hoher Schälfestigkeit und tiefer Glasübergangstemperatur oder hochfeste Produkte mit hoher Glasübergangstemperatur und hoher Schälfestigkeit herstellen; die hochfesten Produkte zeichnen sich durch hohe Risszähigkeiten aus und die Rissfortpflanzung ist auch bei sehr hoher, schockartiger Schlagbeanspruchung deutlich herabgesetzt.

Je nach Anteil der Komponenten (A), (B) und (C) lassen sich die Eigenschaften des gehärteten Endproduktes variieren.

Die folgenden Prozentangaben beziehen sich jeweils auf das Gesamtgewicht der Komponenten (A), (B) und (C).

Wünscht man Produkte mit hoher Festigkeit, hoher Glasübergangstemperatur, hoher Schälfestigkeit, hoher Schlagzähigkeit und hoher Rissfortpflanzungsbeständigkeit (Risszähigkeit), so sollte der Anteil der Komponenten (B) und (C) in der Regel 60 Gew.% nicht überschreiten. Solche Systeme sind in der Regel heterogen. Die untere Grenze richtet sich nach den gewünschten Eigenschaften, beispielsweise der Schälfestigkeit. In der Regel sollten Komponenten (B) und (C) mehr als 5 Gew.%, bevorzugt mehr als 10 Gew.%, ausmachen.

Wünscht man hingegen Produkte mit einer möglichst hohen Flexibilität, so sollten wenigstens 40 Gew.%, bevorzugt mehr als 60 Gew.%, an Komponenten (B) und (C) vorliegen.

Das Gewichtsverhältnis von (B) zu (C) kann in weiten Grenzen variiert werden. Bevorzugter Bereich von (B) zu (C) ist 50:1 bis 1:50, besonders bevorzugt ist 20:1 bis 1:10, ganz besonders bevorzugt ist 5:1 bis 1:5.

Der Anteil des Epoxidharzes (A) an der Gesamtmenge aus (A), (B) und (C) kann ebenfalls in weiten Grenzen variiert werden. Für gehärtete Produkte mit einer erhöhten Flexibilität wird man im allgemeinen geringere Mengen von (A), beispielsweise 10 bis 30 Gew.% einsetzen, wobei Komponente (A) auch als Addukt an (B) vorliegen kann, während für gehärtete Produkte mit einer hohen Festigkeit im allgemeinen grössere Mengen an (A), beispielsweise 50 bis 95 Gew.%, bevorzugt 60-80 Gew.%, eingesetzt werden.

Gewünschtenfalls kann man den härtbaren Gemischen zur weiteren Herabsetzung der Viskosität reaktive Verdünner, wie z.B. Styroloxid, Butylglycidylether, 2,2,4-Trimethylpentylglycidylether, Phenylglycidylether, Kresylglycidylether oder Glycidylester von synthetischen, hochverzweigten, in der Hauptsache tertiären aliphatischen Monocarbonsäuren, zusetzen.

Die Menge an Härter (B) bzw. an Beschleuniger (E) ist vom Härtertyp abhängig und wird vom Fachmann in an sich bekannter Weise ausgewählt. Bevorzugter Härter ist Dicyandiamid. In diesem Falle setzt man pro Mol Epoxidgruppen vorzugsweise 0,1-0,5 Mol des Härters ein.

Als weitere übliche Zusätze können die erfindungsgemässen Gemische ferner Weichmacher, Streck-, Füll- und Verstärkungsmittel, wie beispielsweise Steinkohlenteer, Bitumen, Textilfasern, Glasfasern, Asbestfasern, Borfasern, Kohlenstoff-Fasern, mineralische Silikate, Glimmer, Quarzmehl, Aluminiumoxidhydrat, Bentonite, Wollastonit, Kaolin, Kieselsäureaerogel oder Metallpulver, z.B. Aluminiumpulver oder Eisenpulver, ferner Pigmente und Farbstoffe, wie Russ, Oxidfarben und Titandioxid, Flammschutzmittel, Thixotropiemittel, Verlaufmittel ("flow control agents"), wie Silicone, Wachse und Stearate, die zum Teil auch als Formtrennmittel Anwendung finden, Haftvermittler, Antioxidantien und Lichtschutzmittel enthalten.

Die gehärteten Produkte zeichnen sich durch die anfangs geschilderten vorteilhaften Eigenschaften aus.

Die Erfindung betrifft daher auch die vernetzten Produkte erhältlich durch Härtung von Zusammensetzungen enthaltend (A), (B), (C), (D) und gegebenenfalls (E).

Die erfindungsgemässen Gemische lassen sich beispielsweise als Klebstoffe, Klebefilme, Patches, Matrixharze, Lacke oder Dichtungsmassen oder ganz allgemein zur Herstellung von gehärteten Produkten verwenden. Sie können in jeweils dem speziellen Anwendungsgebiet angepasster Formulierung, in ungefülltem oder gefülltem Zustand, z.B. als Anstrichmittel, Beschichtungsmassen, Lacke, Pressmassen, Tauchharze, Giessharze, Imprägnierharze, Laminierharze, Matrixharze und Klebemittel verwendet werden.

Die Erfindung betrifft auch die Verwendung der erfindungsgemässen Gemische für die Herstellung von Klebstoffen, Klebefilmen, "Patches", Matrixharzen, Giessharzen, Beschichtungsmassen oder Dichtungsmassen.

Da die erfindungsgemässen Stoffgemische auch auf nicht entfetteten Gegenständen eine gute Haftung aufweisen, betrifft die vorliegende Erfindung auch die Verwendung der Stoffgemische zur Erhöhung der Oelverträglichkeit von Klebstoffen.

Die folgenden Beispiele erläutern die Erfindung.

### BEISPIELE

### A. Herstellung der Komponenten

### Phenolterminiertes Polyurethan 1A

Unter Stickstoff gibt man zu 54,4 g Hexamethylendiisocyanat bei 100°C 354 g trockenes Polypropylenglykol (M_{w} = 2000), 1,8 g Trimethylolpropan und 0,1 ml Dibutylzinndilaurat. Nachdem man zwei Stunden bei 100°C gerührt hat und der Isocyanatgehalt unter 4 % abgesunken ist, lässt man dieses Präpolymer bei 80°C in 135 g trockenes 3,3'-Diallylbisphenol A fliessen und rührt 2,5 Stunden bei 80°C und 30 Minuten bei 100°C bis kein freies Isocyanat mehr nachweisbar ist. Man erhält ein viskoses Harz mit den folgenden Analysendaten:
Viskosität η₄₀ = 128600 mPa·s;
Phenolgehalt 2,5 Val/kg;
Molekulargewicht (GPC): Mₙ = 1260, M_{w}/Mₙ = 11,4.

### Präpolymer für Beispiel 1

Unter Stickstoff werden 33,3g carboxylterminiertes Polybutadien (Hycar® CTB 2000 x 162 der Fa. Goodrich), 66,6g trockenes ε-Caprolacton und 0,3 g Dibutylzinnoxid 2 Stunden auf 220°C erhitzt, dann lässt man auf 140°C abkühlen und gibt 150 g Bisphenol A-diglycidylether (Epoxidgehalt 5,4 Val/kg) und 2,5 g Triphenylphosphin zu. Nach zweistündigem Rühren bei 140°C erhält man ein viskoses Harz mit den folgenden Analysendaten:
Viskosität (nach Epprecht): 1560 mPa·s (80°C)
Epoxidgehalt: 2,9 Val/kg.

### Präpolymere für die Beispiele 2-9

Unter Stickstoff werden carboxylterminiertes Butadien/Acrylnitril-Copolymer (Hycar® CTBN 1300 x 8 und 1300 x 13 der Fa. Goodrich) und trockenes ε-Caprolacton bei der in Tabelle I angegebenen Temperatur 3 Stunden in Gegenwart von 0,5 % Dibutylzinnoxid erhitzt. Die Eigenschaften der hergestellten Verbindungen sind in Tabelle I aufgeführt. Diese so erhaltenen carboxylterminierten segmentierten Polyester werden dann an ein Epoxidharz auf Bisphenol A-Basis (Epoxidgehalt 5,4 Val/kg) im Gewichtsverhältnis von 1:1 adduktiert, indem man 2 Stunden bei 140°C in Gegenwart von 1 % Triphenylphosphin erhitzt. Die Eigenschaften der so hergestellten Epoxidaddukte sind in Tabelle I aufgeführt.

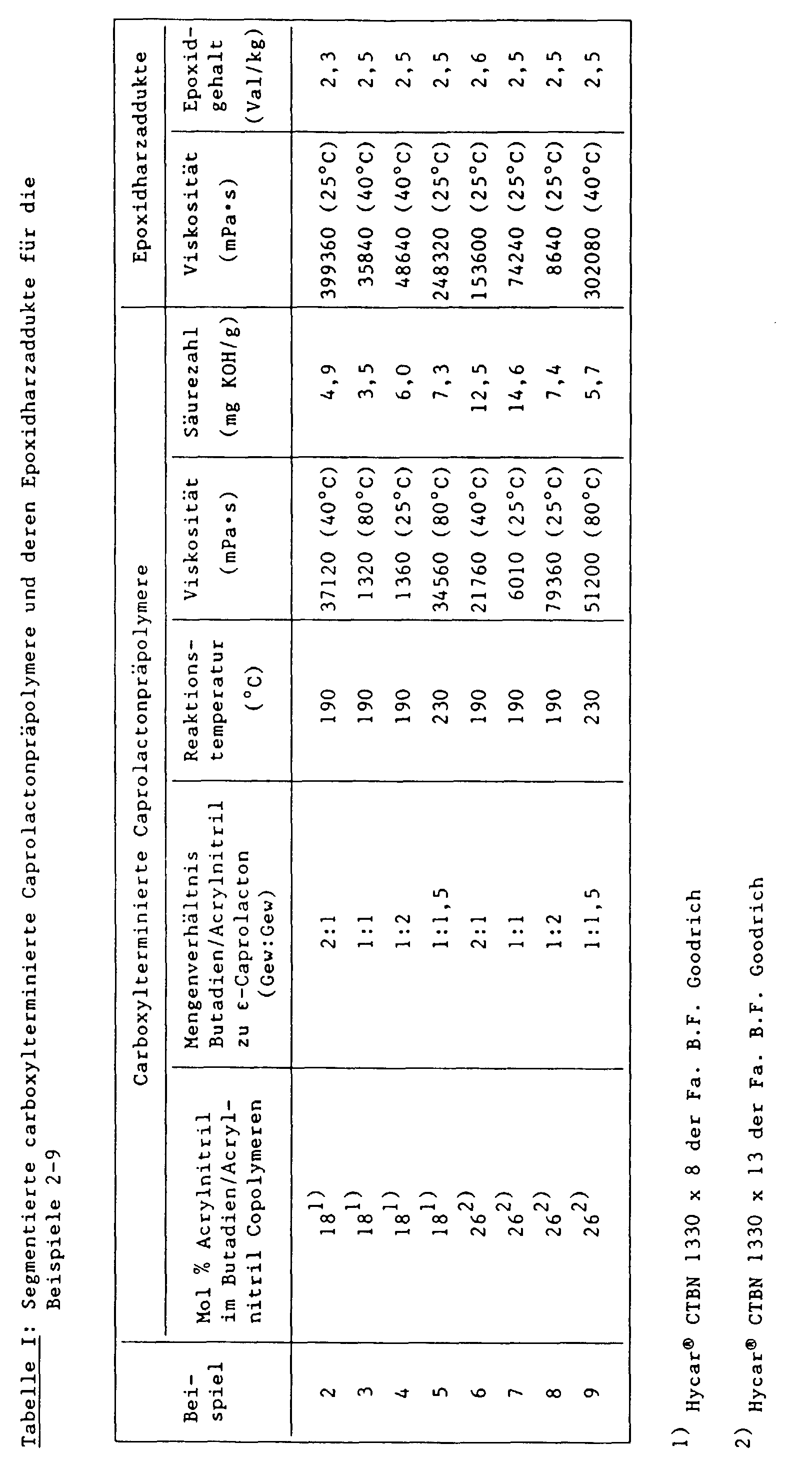

### Präpolymere für die Beispiele 10-12

### a) Herstellung der Butadien/Acrylnitril-Copolymer-Epoxidharzaddukte

Unter Rühren werden 500 g carboxylterminiertes Butadien/Acrylnitril-Copolymer (26 % Acrylnitril, 2,4 % Carboxylgehalt, Hycar® CTBN 1300 x 13 der Fa. Goodrich) mit 1000 g Bisphenol A-diglycidylether (Epoxidgehalt 5,4 Val/kg) in Gegenwart von 2 g Triphenylphosphin 3 Stunden bei 140°C umgesetzt. Man erhält ein viskoses Harz mit einer Viskosität (nach Epprecht) von 11520 mPa·s (40°C) und einem Epoxidgehalt von 3,4 Val/kg.

### b) Umsetzung der Epoxidharzaddukte mit ε-Caprolacton

Zu 300 g des unter (a) erhaltenen Adduktes gibt man die in Tabelle II beschriebenen Mengen ε-Caprolacton und 2 g Dibutylzinnoxid. Durch vierstündiges Erhitzen auf 190°C wird das Caprolacton aufgepfropft. Die Analysedaten sind in Tabelle II zusammengestellt:

**Tabelle II**

| Präpolymere für die Beispiele 10-12 | | | |
|---|---|---|---|
| Beispiel | ε-Caprolacton (g) | Viskosität (40°C) (mPa·s) | Epoxidgehalt (Val/kg) |
| 10 | 100 | 34560 | 2,3 |
| 11 | 200 | 115200 | 1,7 |
| 12 | 300 | 125440 | 1,5 |

### Präpolymer für Beispiel 13

### a) Herstellung des Butadien/Acrylnitril-Copolymer-Epoxidharzaddukts

In einem Planschliffkolben mit Rührer, Stickstoffeinleitung und Rückflusskühler werden 730 g Bisphenol A-diglycidether (Epoxidgehalt 5,4 Val/kg), 200 g carboxylterminiertes Acrylnitril/Butadien-Copolymer (26 % Acrylnitrilgehalt, Säurezahl 32 mg KOH/g, Hycar CTBN 1300 x 13 der Fa. Goodrich), 64 g Bisphenol A und 5 g Triphenylphosphin 3 Stunden bei 130°C erhitzt bis sich ein viskoses Harz mit einem Epoxidgehalt von 3,3 Val/kg mit einer Viskosität nach Epprecht von 130 000 mPas (40°C) bildet.

### b) Umsetzung des Epoxidharzaddukts mit ε-Caprolacton

In diesem Beispiel wird ε-Caprolacton als Reaktivverdünner dem Gemisch beigegeben, und das Butadien/Acrylnitril-Caprolacton Blockcopolymer wird "in situ" während der Härtung des Epoxidharzadduktes gebildet. Zu diesem Zweck wird den verwendeten härtbaren Gemischen zusätzlich noch Dibutylzinnoxid als Katalysator beigegeben (siehe Tabelle III).

### B. Herstellung und Prüfung von Klebstoffmischungen

Auf einem Dreiwalzenstuhl werden die in Tabelle III beschriebenen Komponenten gemischt und zur Verklebung von entfettetem Aluminium bzw. Stahl verwendet. Die Prüfkörper mit einer Ueberlappung von 1,25 cm² werden 1 Stunde bei 180°C gehärtet.

Die Zugscherfestigkeiten (DIN 53285) werden an mit Methylenchlorid ölfrei gewaschenen Stahl- und Aluminiumprüfkörpern von 1,5 mm Dicke bestimmt.

Die Winkelschälfestigkeiten (DIN 53282) werden an ölfreien Stahlprüfkörpern von 0,6 mm Dicke bestimmt.

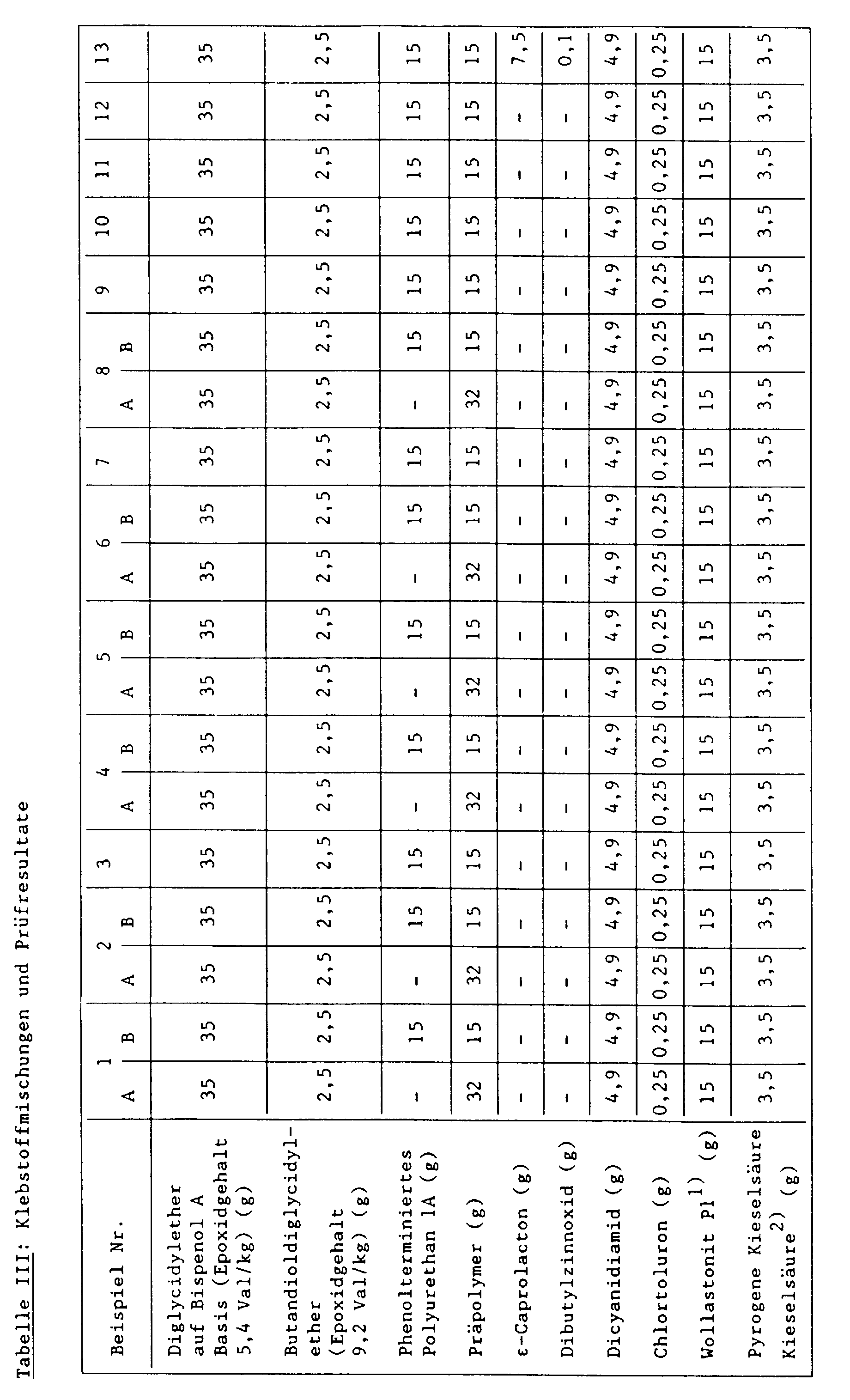

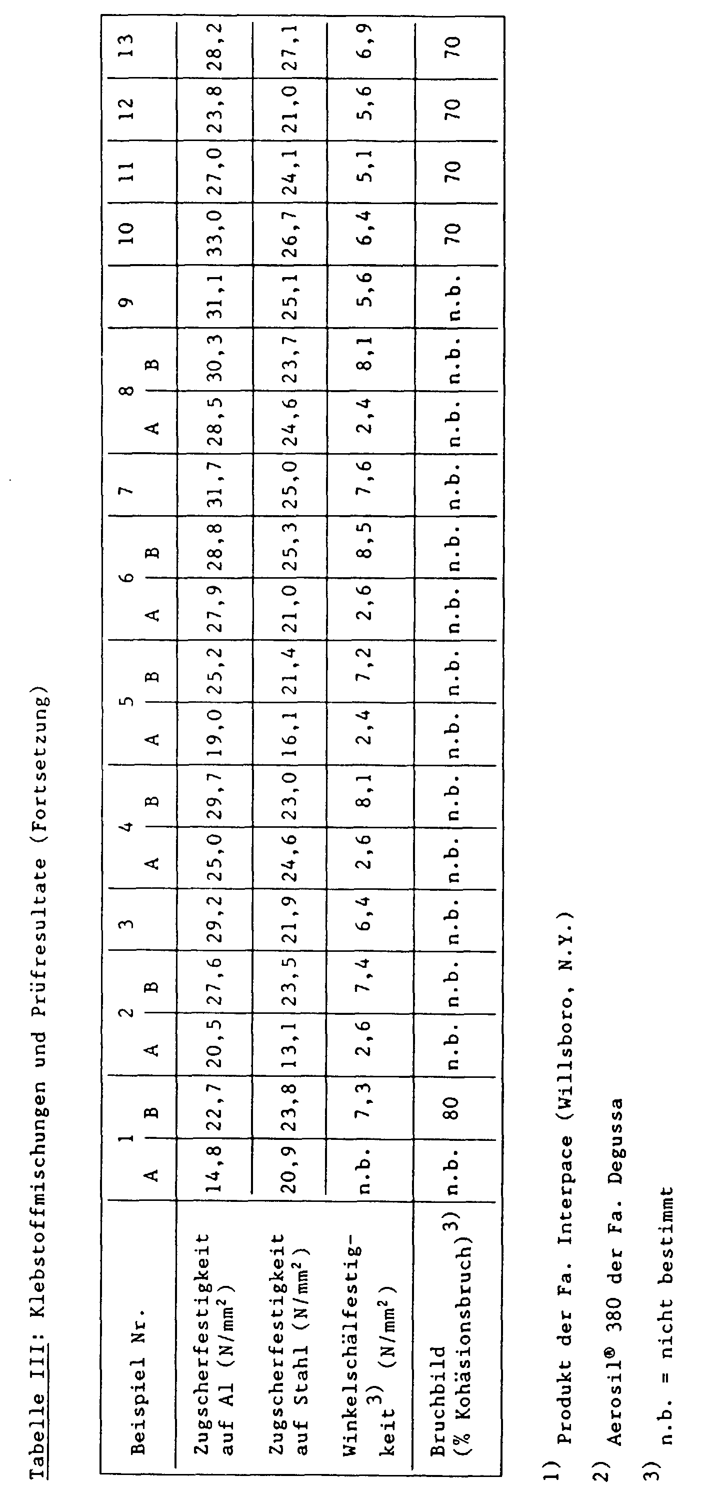

## Patentansprüche (Patentansprüche für folgende(n) Vertragsstaat(en): BE, CH, DE, FR, GB, IT, LI, NL, SE)

1. Zusammensetzungen enthaltend
(A) ein Epoxidharz und
(B) ein Blockpolymer enthaltend mindestens einen Block (B1) eines 1,3-Dien-Homo- oder -Copolymers und mindestens zwei Blöcke (B2) eines Lacton-Homo- oder -Copolymers, und
(C) eine Verbindung der Formel I 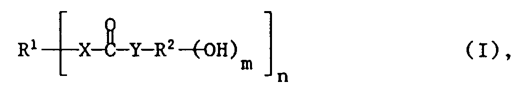 worin m 1 oder 2 ist, n 2 bis 6 bedeutet, R¹ der n-wertige Rest eines in Epoxidharzen löslichen oder dispergierbaren, elastomeren Präpolymeren nach dem Entfernen der endständigen Isocyanat-, Amino- oder Hydroxylgruppen ist,
X und Y unabhängig voneinander -O- oder -NR³- bedeuten, wobei mindestens eine dieser Gruppen -NR³- sein muss, R² ein m+1-wertiger Rest eines Polyphenols oder Aminophenols nach dem Entfernen der phenolischen Hydroxylgruppen bzw. der Aminogruppe ist, und R³ Wasserstoff, C₁-C₆Alkyl oder Phenyl bedeutet.

2. Zusammensetzung nach Anspruch 1, worin die Dien-Komponente des Blocks (B1) Butadien ist.

3. Zusammensetzung nach Anspruch 1, worin der Block (B1) neben der Dien-Komponente noch 0,1 bis 50 Mol % einer vinylaromatischen Verbindung, Acrylnitril, Methacrylnitril oder eines Acrylsäure- oder Methacrylsäurederivats enthält.

4. Zusammensetzung nach Anspruch 1, worin die Blocklänge des Blocks (B1) einem Molekulargewicht Mₙ von 500 bis 10000 entspricht.

5. Zusammensetzung nach Anspruch 1, worin die Lacton-Komponente des Blocks (B2) ε-Caprolacton ist.

6. Zusammensetzung nach Anspruch 1, worin die Blocklänge des Blocks (B2) einem Molekulargewicht Mₙ von 200 bis 10000 entspricht.

7. Zusammensetzung nach Anspruch 1 enthaltend zusätzlich (D) einen Härter für Epoxidharze und gegebenenfalls (E) einen Härtungsbeschleuniger.

8. Die durch Härtung der Zusammensetzung nach Anspruch 7 erhältlichen vernetzten Produkte.

9. Verwendung der Zusammensetzung nach Anspruch 7 für die Herstellung von Klebstoffen, Klebefilmen, "Patches", Matrixharzen, Giessharzen, Beschichtungsmassen oder Dichtungsmassen.

10. Verwendung der Zusammensetzung nach Anspruch 1 oder 7 zur Erhöhung der Oelverträglichkeit von Klebstoffen.

## Patentansprüche (Patentansprüche für folgende(n) Vertragsstaat(en): ES)

1. Zusammensetzungen enthaltend
(A) ein Epoxidharz und
(B) ein Blockpolymer enthaltend mindestens einen Block (B1) eines 1,3-Dien-Homo- oder -Copolymers und mindestens zwei Blöcke (B2) eines Lacton-Homo- oder -Copolymers, und
(C) eine Verbindung der Formel I 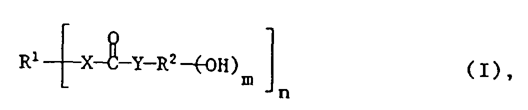 worin m 1 oder 2 ist, n 2 bis 6 bedeutet, R¹ der n-wertige Rest eines in Epoxidharzen löslichen oder dispergierbaren, elastomeren Präpolymeren nach dem Entfernen der endständigen Isocyanat-, Amino- oder Hydroxylgruppen ist,
X und Y unabhängig voneinander -O- oder -NR³- bedeuten, wobei mindestens eine dieser Gruppen -NR³- sein muss, R² ein m+1-wertiger Rest eines Polyphenols oder Aminophenols nach dem Entfernen der phenolischen Hydroxylgruppen bzw. der Aminogruppe ist, und R³ Wasserstoff, C₁-C₆Alkyl oder Phenyl bedeutet.

2. Zusammensetzung nach Anspruch 1, worin die Dien-Komponente des Blocks (B1) Butadien ist.

3. Zusammensetzung nach Anspruch 1, worin der Block (B1) neben der Dien-Komponente noch 0,1 bis 50 Mol % einer vinylaromatischen Verbindung, Acrylnitril, Methacrylnitril oder eines Acrylsäure- oder Methacrylsäurederivats enthält.

4. Zusammensetzung nach Anspruch 1, worin die Blocklänge des Blocks (B1) einem Molekulargewicht Mₙ von 500 bis 10000 entspricht.

5. Zusammensetzung nach Anspruch 1, worin die Lacton-Komponente des Blocks (B2) ε-Caprolacton ist.

6. Zusammensetzung nach Anspruch 1, worin die Blocklänge des Blocks (B2) einem Molekulargewicht Mₙ von 200 bis 10000 entspricht.

7. Zusammensetzung nach Anspruch 1 enthaltend zusätzlich (D) einen Härter für Epoxidharze und gegebenenfalls (E) einen Härtungsbeschleuniger.

8. Verfahren zur Herstellung von vernetzten Produkten durch Erhitzen der Zusammensetzung nach Anspruch 7.

9. Verwendung der Zusammensetzung nach Anspruch 7 für die Herstellung 9, von Klebstoffen, Klebefilmen, "Patches", Matrixharzen, Giessharzen, Beschichtungsmassen oder Dichtungsmassen.

10. Verwendung der Zusammensetzung nach Anspruch 1 oder 7 zur Erhöhung der Oelverträglichkeit von Klebstoffen.

## Claims (Claims for the following Contracting State(s): BE, CH, DE, FR, GB, IT, LI, NL, SE)

1. A composition comprising
(A) an epoxy resin and
(B) a block polymer containing at least one block (B1) of a 1,3-diene homopolymer or copolymer and at least two blocks (B2) of a lactone homopolymer or copolymer, and
(C) a compound of formula I 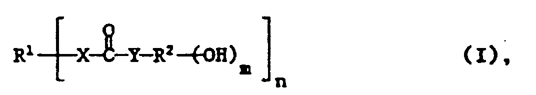 wherein m is 1 or 2, n is 2 to 6, R¹ is the n-valent radical of an elastomeric prepolymer which is soluble or dispersible in epoxy resins, after removal of the terminal isocyanate, amino or hydroxyl groups, X and Y are each independently of the other -O- or -NR³-, with the proviso that at least one of these groups is -NR³-, R² is an m + 1-valent radical of a polyphenol or aminophenol after removal of the phenolic hydroxyl groups or of the amino group, and R³ is hydrogen, C₁-C₆alkyl or phenyl.

2. A composition according to claim 1, wherein the diene component of the block (B1) is butadiene.

3. A composition according to claim 1, wherein the block (B1), in addition to containing the diene component, also contains 0.1 to 50 mol% of a vinylaromatic compound, acrylonitrile, methacrylonitrile or of an acrylic acid or methacrylic acid derivative.

4. A composition according to claim 1, wherein the block length of the block (B1) is equivalent to a molecular weight Mₙ of 500 to 10,000.

5. A composition according to claim 1, wherein the lactone component of the block (B2) is ε-caprolactone.

6. A composition according to claim 1, wherein the block length of the block (B2) is equivalent to a molecular weight Mₙ of 200 to 10,000.

7. A composition according to claim 1, additionally comprising (D) a hardener for epoxy resins and optionally (E) a curing accelerator.

8. A crosslinked product obtainable by curing the composition of claim 7.

9. The use of the composition of claim 7 for the preparation of adhesives, adhesive films, patches, matrix resins, casting resins, coating compositions or sealing compounds.

10. The use of the composition of claim 1 or 7 for enhancing the compatibility of adhesives with oil.

## Claims (Claims for the following Contracting State(s): ES)

1. A composition comprising
(A) an epoxy resin and
(B) a block polymer containing at least one block (B1) of a 1,3-diene homopolymer or copolymer and at least two blocks (B2) of a lactone homopolymer or copolymer, and
(C) a compound of formula I 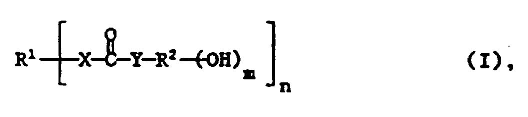 wherein m is 1 or 2, n is 2 to 6, R¹ is the n-valent radical of an elastomeric prepolymer which is soluble or dispersible in epoxy resins, after removal of the terminal isocyanate, amino or hydroxyl groups, x and Y are each independently of the other -O- or -NR³-, with the proviso that at least one of these groups is -NR³-, R² is an m + 1-valent radical of a polyphenol or aminophenol after removal of the phenolic hydroxyl groups or of the amino groups, and R³ is hydrogen, C₁-C₆alkyl or phenyl.

2. A composition according to claim 1, wherein the diene component of the block (B1) is butadiene.

3. A composition according to claim 1, wherein the block (B1), in addition to containing the diene component, also contains 0.1 to 50 mol% of a vinylaromatic compound, acrylonitrile, methacrylonitrile or of an acrylic acid or methacrylic acid derivative.

4. A composition according to claim 1, wherein the block length of the block (B1) is equivalent to a molecular weight Mₙ of 500 to 10,000.

5. A composition according to claim 1, wherein the lactone component of the block (B2) is ε-caprolactone.

6. A composition according to claim 1, wherein the block length of the block (B2) is equivalent to a molecular weight Mₙ of 200 to 10,000.

7. A composition according to claim 1, additionally comprising (D) a hardener for epoxy resins and optionally (E) a curing accelerator.

8. A process for the preparation of crosslinked products by heating the composition of claim 7.

9. The use of the composition of claim 7 for the preparation of adhesives, adhesive films, patches, matrix resins, casting resins, coating compositions or sealing compounds.

10. The use of the composition of claim 1 or 7 for enhancing the compatibility of adhesives with oil.

## Revendications (Revendications pour l'(les) Etat(s) contractant(s) suivant(s): BE, CH, DE, FR, GB, IL, LI, NL, SE)

1. Composition contenant
(A) une résine époxyde et
(B) un copolymère séquencé contenant au moins un bloc (B1) d'un homo- ou copolymère 1,3-diénique et au moins deux blocs (B2) d'un homo- ou copolymère de lactone, et
(C) un composé de formule I 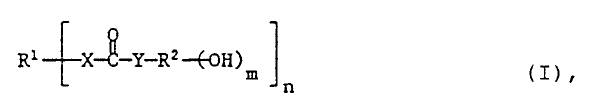 dans laquelle m vaut 1 ou 2, n va de 2 à 6, R¹ est un reste n-valent d'un prépolymère élastomère soluble ou dispersable dans une résine époxyde, après avoir éliminé les groupes terminaux isocyanato, amino ou hydroxyle, X et Y, indépendamment l'un de l'autre, représentent -O- ou -NR³-, au moins un de ces groupes devant être -NR³-, R² est un reste à valence m+1 d'un polyphénol ou d'un aminophénol après élimination des groupes hydroxyles de phénol, ou bien des groupes amino, et R³ représente l'hydrogène, alkyle en C₁-C₆ ou phényle.

2. Composition selon la revendication 1, dans laquelle le composant diènique du bloc (B1) est le butadiène.

3. Composition selon la revendication 1, dans laquelle le bloc (B1) aux côtés du composant diène contient encore de 0,1 à 50 % en moles d'un composé vinylaromatique, d'acrylonitrile, de méthacrylonitrile ou d'un dérivé d'acide acrylique ou d'acide méthacrylique.

4. Composition selon la revendication 1, dans laquelle la longueur de bloc du bloc (B1) correspond à une masse molaire Mₙ de 500 à 10 000.

5. Composition selon la revendication 1, dans laquelle le composant lactone du bloc (B2) est l'ε-caprolactone.

6. Composition selon la revendication 1, dans laquelle la longueur de bloc du bloc (B2) correspond à une masse molaire Mₙ de 200 à 10 000.

7. Composition selon la revendication 1 contenant, de plus, (D) un durcisseur de résines époxydes et éventuellement (E) un accélérateur de durcissement.

8. Produits réticulés que l'on peut obtenir par durcissement de la composition selon la revendication 7.

9. Utilisation de la composition selon la revendication 7, pour la préparation d'adhésifs, de films adhésifs, de "patches", de résines de matrice, de résines à couler, de matières d'enduits ou de mastics.

10. Utilisation de la composition selon la revendication 1 ou 7, pour augmenter la compatibilité des adhésifs avec l'huile.

## Revendications (Revendications pour l'(les) Etat(s) contractant(s) suivant(s): ES)

1. Composition contenant
(A) une résine époxyde et
(B) un copolymère séquencé contenant au moins un bloc (B1) d'un homo- ou copolymère 1,3-diénique et au moins deux blocs (B2) d'un homo- ou copolymère de lactone, et
(C) un composé de formule I 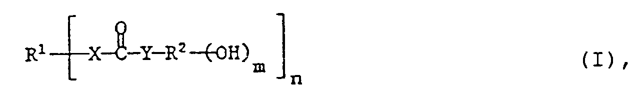 dans laquelle m vaut 1 ou 2, n va de 2 à 6, R¹ est un reste n-valent d'un prépolymère élastomère soluble ou dispersable dans une résine époxyde, après avoir éliminé les groupes terminaux isocyanato, amino ou hydroxyles, X et Y, indépendamment l'un de l'autre, représentent -O- ou -NR³-, au moins un de ces groupes devant être -NR³-, R² est un reste à valence m+1 d'un polyphénol ou d'un aminophénol après élimination des groupes hydroxyles de phénol ou bien des groupes amino, et R³ représente l'hydrogène, alkyle en C₁-C₆ ou phényle.

2. Composition selon la revendication 1, dans laquelle le composant diènique du bloc (B1) est le butadiène.

3. Composition selon la revendication 1, dans laquelle le bloc (B1) contient, aux côtés du composant diènique, encore de 0,1 à 50 % en moles d'un composé vinylaromatique, d'acrylonitrile, de méthacrylonitrile ou d'un dérivé d'acide acrylique ou d'acide méthacrylique.

4. Composition selon la revendication 1, dans laquelle la longueur de bloc du bloc (B1) correspond à une masse molaire Mₙ de 500 à 10 000.

5. Composition selon la revendication 1, dans laquelle le composant lactone du bloc (B2) est l'ε-caprolactone.

6. Composition selon la revendication 1, dans laquelle la longueur de bloc du bloc (B2) correspond à une masse molaire Mₙ de 200 à 10 000.

7. Composition selon la revendication 1, contenant, de plus, (D) un durcisseur de résines époxydes et éventuellement (E) un accélérateur de durcissement.

8. Procédé de préparation de produits réticulés par chauffage de la composition selon la revendication 7.

9. Utilisation de la composition selon la revendication 7, pour la préparation d'adhésifs, de films adhésifs, de "patches", de résines de matrice, de résines à couler, de matières d'enduits ou de mastics.

10. Utilisation de la composition selon la revendication 1 ou 7, pour augmenter la compatibilité des adhésifs avec l'huile.
